# EUROPEAN PATENT SPECIFICATION

(11) **EP 3 049 719 B1**
(45) Date of publication and mention of the grant of the patent: **26.12.2018**
(21) Application number: 14849287.9
(22) Date of filing: 23.09.2014
(51) Int. Cl.: F22D 1/00, F22G 1/16, F02C 6/18

(54) **HEAT EXCHANGING SYSTEM AND METHOD FOR A HEAT RECOVERY STEAM GENERATOR**
WÄRMETAUSCHSYSTEM UND -VERFAHREN FÜR EINEN WÄRMERÜCKGEWINNUNGSDAMPFGENERATOR
SYSTÈME D'ÉCHANGE DE CHALEUR ET PROCÉDÉ POUR UN GÉNÉRATEUR DE VAPEUR À RÉCUPÉRATION DE CHALEUR

(30) Priority: 26.09.2013 US 201361882911 P
(43) Date of publication of application: 03.08.2016
(73) Proprietor: Nooter/Eriksen, Inc., Fenton, MO 63026 (US)
(72) Inventor: KLOECKENER, Daniel B., Fenton, Missouri 63026 (US)
(74) Representative: Marles, Alan David
(86) International application number: PCT/US2014/057005
(87) International publication number: WO 2015/048029

(56) References cited:
- WO-A2-2008/118701
- RU-C2- 2 416 729
- US-A1- 2012 255 303
- US-A1- 2014 260 285
- US-B1- 6 508 206

## Description

### RELATED APPLICATIONS

This application claims priority to U.S. Provisional Application No. 61/882,911 filed on September 26, 2013, with named inventor Daniel B. Kloeckener.

### BACKGROUND ART

Natural gas serves as the energy source for much of the currently generated electricity. To this end, the gas undergoes combustion in a gas turbine which powers an electrical generator. However, the products of combustion leave the gas turbine as an exhaust gas quite high in temperature. In other words, the exhaust gas represents an energy source itself. This energy is captured in a heat recovery steam generator ("HRSG") that produces superheated steam that powers another electrical generator.

Such exhaust gas includes carbon dioxide and water in the vapor phase, but also includes traces of sulfur in the form of sulfur dioxide and trioxide. Those sulfur compounds, if combined with water, produce sulfuric acid which is highly corrosive. As long as the temperatures of the heating surfaces remain above the acid dew point temperature of the exhaust gas, SO₂ and SO₃ pass through the HRSG without harmful effects. But if any surface drops to a temperature below the acid dew point temperature, sulfuric acid will condense on that surface and corrode it.

Dew point temperatures vary depending on the fuel that is consumed. For natural gas the temperature of the heating surfaces should not fall below about 60°C (140°F). For most fuel oils it should not fall below about 113°C (235°F).

Generally, an HRSG comprises a casing having an inlet and an outlet and a succession of heat exchangers-namely a superheater, an evaporator, and a feedwater heater arranged in that order within the casing between the inlet and outlet.

Such heat exchangers for an HRSG can have multiple banks of coils, the last of which in the direction of the gas flow can be a feedwater heater. Surfaces vulnerable to corrosion by sulphuric acid do exist on the feedwater heater. The feedwater heater receives condensate that is derived from low-pressure steam discharged by the steam turbine, and elevates the temperature of the water. Then the warmer water from the feedwater heater flows into one or more evaporators that convert it into saturated steam. That saturated steam flows on to the superheater which converts it into superheated steam. From the superheater, the superheated steam flows to the steam turbine.

In this process, by the time the hot gas reaches the feedwater heater at the back end of the HRSG, its temperature is quite low. However, that temperature should not be so low that acids condense on the heating surfaces of the feedwater heater.

Generally, in the above-discussed process, most HRSGs produce superheated steam at three pressure levels - low pressure (LP), intermediate pressure (IP) and high pressure (HP). Further, an HRSG can have what are termed an LP Evaporator, an HP Economizer, and an IP Economizer. The feedwater heater typically discharges some of the heated feedwater directly into an LP evaporator.

A feedwater heater, or preheater, in a steam generator extracts heat from low temperature gases to increase the temperature of the incoming condensate before it goes off to the LP evaporator, HP economizer, or IP economizer. Multiple methods have been used to increase the temperature of the condensate before it enters any part of the preheater tubes within the gas path (e.g., recirculation pump, external heat exchanger). These methods are used to prevent the exhaust gas temperature from dropping below the acid dew point and causing sulfuric acid corrosion.

Prior systems and methods have been limited in application because the feedwater temperature was not high enough to protect against dew point corrosion of all fuels. The movement of the heat transfer coils to the hotter regions provides for higher differentials in the heat exchanger.

US Patent 6508208 discloses an HRSG that includes a superheater and at least one evaporator. The positions of the superheater and evaporator are illustrated in Figure 4 of that Patent. That Patent states that feedwater flows into the evaporator which converts it into saturated steam. The superheater converts the saturated steam into superheated steam which flows onto the steam turbine to power it. In that Patent, the feedwater heater comprises two sections positioned adjacent each other. However that Patent does not disclose water flow from the evaporator or the superheater being directed back to the feedwater heater sections or otherwise disclose flow from an evaporator or coil located upstream the feedwater heater sections to be directed to the water-to-water heat exchanger.

According to the present invention there is disclosed an HRSG as claimed in present claim 1 and a process for heating feedwater for an HRSG as claimed in present claim 17. Preferred features of the invention are set out in the attached subclaims.

In the present disclosure, an external water-to-water heat exchanger heats the lower temperature inlet condensate with the source of heat being hot water that is exiting the first stage of the feedwater heater. The condensate flow first enters the external heat exchanger. Thereafter preheated condensate leaves the external heat exchanger and enters the feedwater heater. Water energy exiting the preheater is used to preheat the incoming condensate. The present disclosure places a section of a preheater surface into a hotter section of the gas flow, upstream of the LP evaporator, to achieve the beneficial result of increasing source inlet temperature and directly increasing the outlet temperature of the preheated condensate exiting the external heat exchanger. This arrangement allows the use of an external heat exchanger in designs with higher dew points in the cold end. The present system and method can thus create a larger temperature differential in the external water-to-water heat exchanger. This larger temperature differential than present in the prior art, yields a higher outlet temperature and protects the HRSG from cold end condensation corrosion from fuels with higher acid dew points.

The foregoing and other features and advantages of the invention as well as presently preferred embodiments thereof will become more apparent from the reading of the following description in connection with the accompanying drawings.

### BRIEF DESCRIPTION OF DRAWINGS

Fig. 1 is a schematic view of a power system that uses an heat recovery steam generator ("HRSG") provided with inventive features;
Fig 2 is a sectional view of a novel HRSG;
Fig. 3 is a schematic view of elements of a novel HRSG;
Fig. 4 is a schematic view of elements of another embodiment of the novel HRSG; and
Fig. 5 is a schematic view of elements of another embodiment of the HRSG.

Corresponding reference numerals indicate corresponding parts throughout the several figures of the drawings.

### BEST MODE FOR CARRYING OUT THE INVENTION

The following detailed description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

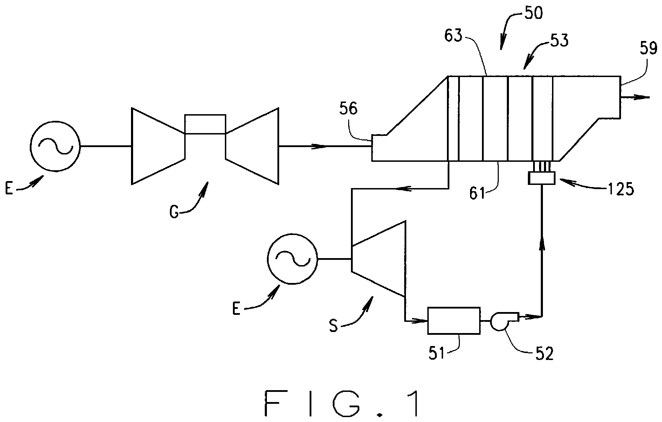

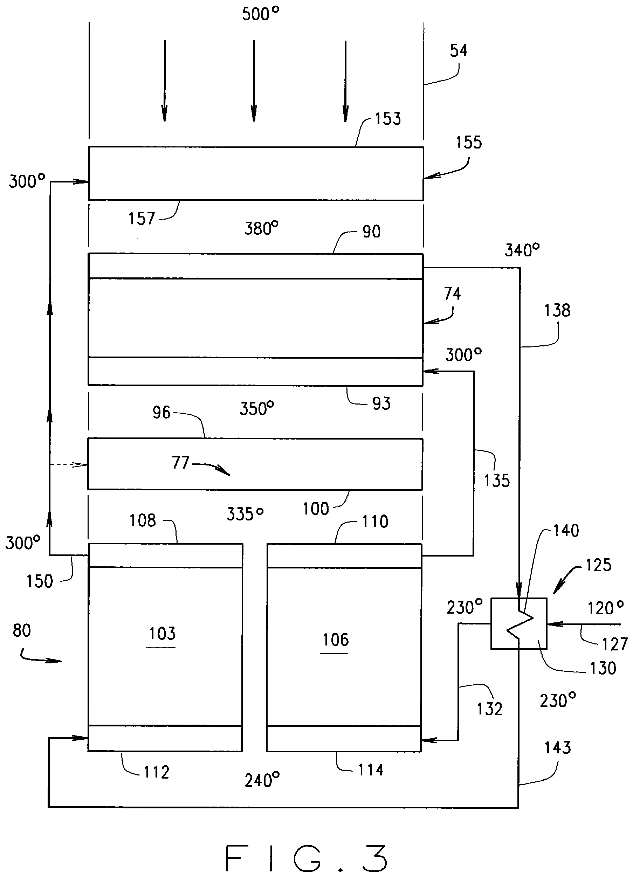

The inventive disclosures are now provided for a heat exchanging system and method for use in an HRSG. An overall illustration of a system which features use in a heat-recovery steam generator (HRSG) appears in U.S. Patent No. 6,508,206 B1 (hereafter "'206 Patent"). Fig. 1 of the present application shows a layout similar to that shown in Fig. 3 of the '206 Patent. Fig. 1 hereof discloses a gas turbine G that discharges hot exhaust gases into an HRSG 50, which extracts heat from the gases to produce steam to power a steam turbine S. The gas turbine G and steam turbine S power the generators E that are capable of producing electrical energy. The steam turbine S discharges steam at a low temperature and pressure into a condenser 51 where it is condensed into liquid water. The condenser 51 is in flow connection with a condensate pump 52 that directs the water back to the HRSG 50 as feedwater.

The disclosure of the present inventive features of the present application show an HRSG 50 with an arrangement of heat exchangers and flow channels that provide improvements over the prior art.

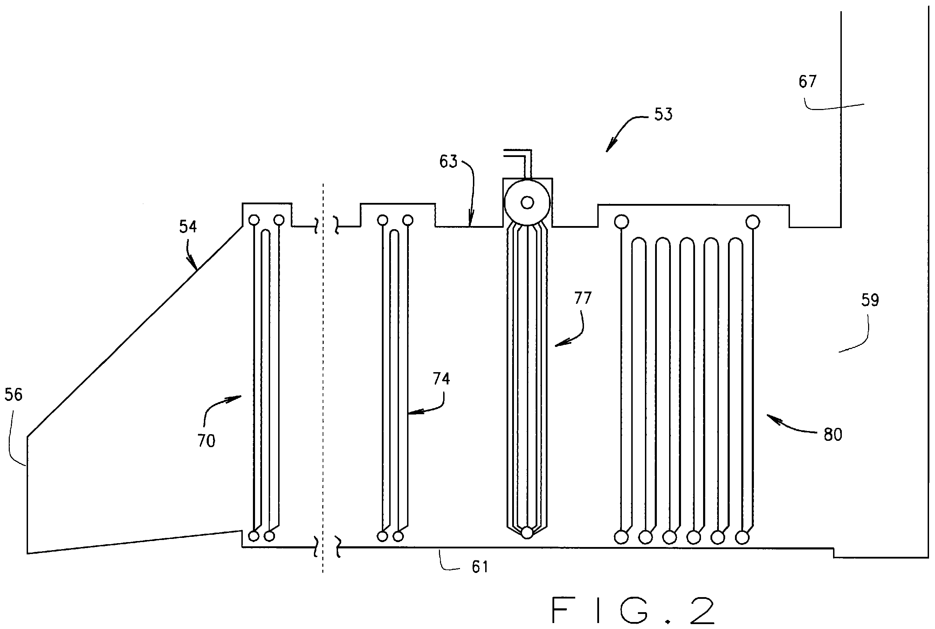

With reference to Figs. 1 and 2 of the present application, the HRSG 50 has a casing 53 within which are heat exchangers. Hot gases, such as discharged from a gas turbine, enter the casing 53 and pass through a duct 54 having an inlet 56 and an outlet 59. During that process, that gas passes through heat exchangers.

The casing 53 generally will have a floor 61 over which the heat exchangers are supported, and sidewalls that extend upwardly from the floor 61. Typically the top of the casing 53 is closed by a roof 63. The floor 61 and roof 63 extend between the sidewalls so that the floor 61, sidewalls and roof 63 help to form the duct 54. From outlet 59 the gas can flow through flu 67.

Generally, the heat exchangers comprise coils that have a multitude of tubes that usually are oriented vertically and arranged one after the other transversely across the interior of the casing 53. The coils are also arranged in rows located one after the other in the direction of the hot gas flow depicted by the arrows in Fig. 3 of the present application. The tubes contain water in whatever phase its coils are designed to accommodate. The length of the tubes can be as great as 80' tall.

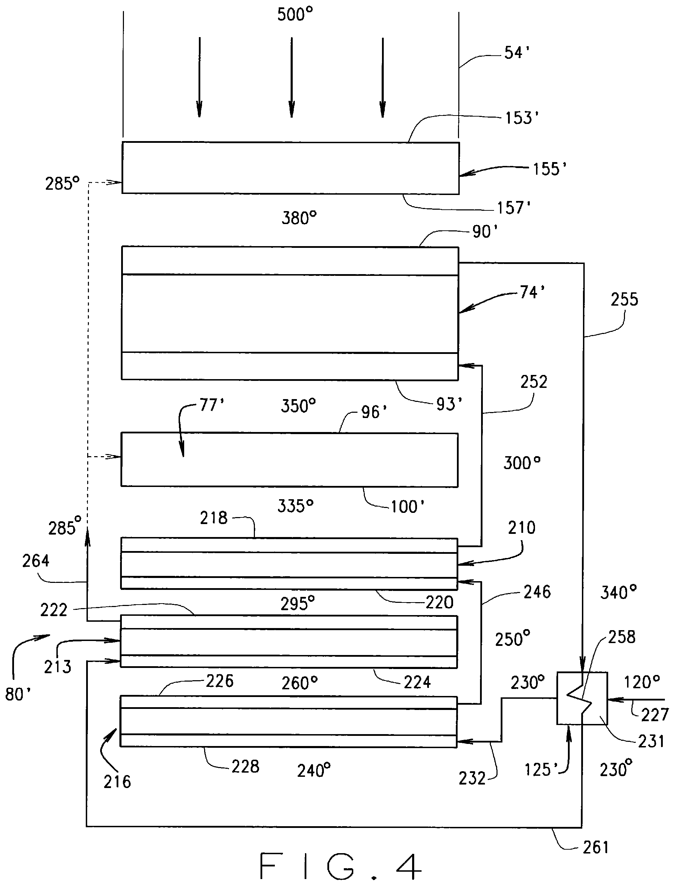

Now attention is directed to the arrangement of the heat exchangers shown in Fig. 2. The general description for Fig. 2 will be given with an orientation of moving from the inlet 56 to the outlet 59, or from the left to the right looking at Fig. 2. Generally, reference character 70 represents what are termed "Upstream Coils" in an HRSG. For example, such Upstream Coils can include what are referred to in the '206 Patent, as a superheater designated by reference character 16 in the '206 Patent that converts saturated steam to superheated steam; followed by at least one evaporator such as a high-pressure evaporator ("HP Evaporator") shown as 18 in the '206 Patent; thence followed by a high-pressure economizer ("HP Economizer"). The HP Economizer is shown as a group of coils immediately to the right of the evaporator designated 18, and shown in Fig. 4 of the '206 Patent. Hence the term "Upstream Coils 70" generally refer to all of the Superheater, HP Evaporator and HP Economizer. The amount of the space devoted to such components in the HRSG can depend upon the desired characteristics and performance of the HRSG 50.

Downstream from the Upstream Coils 70, the novel arrangement has a preheater booster 74. As will be discussed, the preheater booster 74 provides for a feedwater heater presence in a hotter region of the HRSG to facilitate return feeding therefrom to a heat exchanger that feeds water to other parts of the feedwater heater.

Continuing the description from upstream to downstream, left to right in Fig. 2, downstream from preheater booster 74 appears a low pressure evaporator 77 ("LP Evaporator"). Thence downstream from the LP Evaporator is what is generally designated a feedwater heater 80.

Now, with more specific reference to the schematic view of Fig. 3, the preheater booster 74 comprises a coil having an upstream face 90 and a downstream face 93. The exhaust gases flow into the upstream face 90 through the coil and thence through the downstream face 93 to leave the preheater booster 74.

As seen in the Fig. 3 schematic, the LP Evaporator 77 has an upstream face 96 and a downstream face 100. The exhaust gas leaves the preheater booster 74 thence flows into the LP Evaporator 77 front face 96, through the LP Evaporator 77, and through the LP Evaporator's downstream face 100 toward the feedwater heater 80.

The feedwater heater 80 has two sections 103 and 106, which can be arranged side by side in the duct 54, as shown in Fig. 3. Sections 103 and 106 each have an upstream face 108 and 110, respectively. The exhaust gases flow into the upstream faces 108 and 110, then through the coils of sections 103 and 106 respectively, thence exit through the downstream faces 112 and 114, respectively. From there, the exhaust gases can flow through outlet 59 and exit flu 67.

Focusing now on the flow of water among aforementioned components of the arrangement, a water-to-water heat exchanger 125 is illustrated as located to the exterior of the duct 54. The condensate pump 52 discharges feedwater into a supply pipe 127, which delivers that feed water into the inlet of the low temperature path 130 of heat exchanger 125. The feedwater leaves the low temperature path 130 in exchanger 125 at its outlet and flows into a connecting pipe 132 which acts as a conduit. Pipe 132 delivers the feedwater to the tubes at the downstream face 114 of section 106. The water leaves the section 106 at its upstream face 110 and flows through a transfer pipe 135 which serves as a conduit to connect with the inlet of the preheater booster 74 coil at its downstream face 93. The water flows thence through preheater booster coil 74 toward the upstream side thereof to exit the preheater booster coil 74 at its upstream face 90. From there, it flows into a transfer pipe 138 which acts as a conduit to connect with the inlet of the high temperature path 140 of heat exchanger 125.

Within the high temperature path 140 of heat exchanger 125 the temperature of the water decreases since it loses heat to water in the low temperature path 130. At the outlet of the high temperature path 140, the water enters transfer pipe 143 which acts as a conduit to be delivered to the section 103 at its downstream face 112. The water thence flows through section 103 to exit therefrom at its upstream face 108 whereby the temperature of the water is raised, to thence pass through a discharge pipe 150. Pipe 150 acts as a conduit and extends to connect with the LP Evaporator 77 at its downstream face 100. From the upstream face 96 of LP Evaporator 77, the water can flow, for example, to the HP Economizer.

Now the system will be discussed with exemplary temperatures. The exhaust gases from the gas turbine "G", enter the upstream face 153 of the last of the Upstream Coils 70, here designated, for example, as a high pressure (HP) economizer 155. The gases enter the HP Economizer upstream face 153 at a temperature of about 260°C (500°F). The exhaust gases exit the downstream face of HP Economizer 155 at a temperature of about 193°C (380°F), and enter the upstream face 90 of preheater booster 74 at about that same temperature.

Fig. 3 shows water leaving both of the upstream faces 108 and 110 of feedwater heater sections 103 and 106, respectively, at about 149°C (300°F). From the upstream face 110 of section 106, the water passes through pipe 135 to enter the downstream face 93 of preheater booster 74 at about 149°C (300°F). That fluid leaves the preheater booster upstream face 90 through pipe 138 at about 171°C (340°F). Through pipe 138, the water then flows into the high temperature path 140 of the heat exchanger 125 at about 171°C (340°F).

Water from the condensate pump 52 discharges water at about 49°C (120°F), which enters the heat exchanger 125 through pipe 127 at about the same temperature.

Now a review of the temperatures of the water flowing into and leaving the feedwater heater sections 103 and 106 is given. Fig. 3 shows that the water from the low temperature path of heat exchanger 125 feeds into the pipe 132 at about 110°C (230°F). From there, the water enters feedwater heater section 106 at its downstream face 114 at about 110°C (230°F). The water then passes through section 106 to exit at its upstream face 110 into pipe 135 at a temperature of about 149°C (300°F).

Turning now to the feedwater heater section 103, the temperature of water exiting the heat exchanger high temperature path 140 enters pipe 143 at about 110°C (230°F). From there it enters the downstream face 112 of section 103 at about 110°C (230°F).

Thus the water temperature entering both downstream faces 112 and 114 of sections 103 and 106 is about 110°C (230°F).

The water entering section 103 exits at its upstream face 108 at the temperature of about 149°C (300°F) to pass through pipe 150 into LP Evaporator 77 at that temperature. Pipe 150 can also have a branches feeding off of it at 149°C (300°F) to the downstream face 157 of HP Economizer 155. Additionally, depending on the arrangement of coils of a particular HRSG, water feeding off the upstream face 108 of section 103 can also flow at 149°C (300°F) to the downstream face of other coils located upstream of preheater booster 74, such as to the downstream face of an intermediate pressure (IP) Economizer.

The temperature of the hot gas exiting the downstream face 100 of LP Evaporator 77 and entering at the upstream faces 108 and 110 of feedwater heater sections 103 and 106 is about 168°C (335°F). The temperature of the hot gas exiting the feedwater heater sections 103 and 106, at their respective downstream faces 112 and 114, is about 116°C (240°F).

Thus the surfaces of the tubes making up feedwater heater sections 103 and 106 are maintained to be about 116°C (240°F) or higher. This temperature is higher than the aforementioned dew point for condensation of sulphuric acid. Thus the condensation of sulfuric acid on the surfaces of the tubes making up the sections 103 and 106 will be resisted with the present design.

The gases leave the downstream preheater booster face 93 at a temperature of about 177°C (350°F), and enter the upstream face 96 of the LP Evaporator 77 at about that 177°C (350°F) temperature. The gases exit the LP Evaporator downstream face 100 at a temperature of about 168°C (335°F).

Feedwater from the condenser 51 can be discharged at approximately 49°C (120°F) through the supply pipe 127 into the low temperature path 130 of the heat exchanger 125.

The water leaving the heat exchanger 125 through the high temperature path exits at 110°C (230°F) and flows into section 103 at its downstream face 112 at a temperature of about 110°C (230°F).

With the present design the heat exchanger designated 125 does not require recirculation, and thus a recirculation pump and its attendant overhead and expense is not required for the heat exchanger. Further, with the present design there is no need to bypass any section of feedwater heater 80.

Also, with the present arrangement, the water temperature feeding into the LP Evaporator 77 from the feedwater preheater 80 enters at a temperature of 149°C (300°F) as compared to 121°C (250°F) with a temperature of water feeding into an LP Evaporator of a prior art system. Moreover, in the present system, water temperature of 149°C (300°F) feeding from the feedwater heater section 103 to the HP Economizer 155 or other economizer located upstream of the LP Evaporator, compares favorably to the water input temperature of 121°C (250°F) to HP Economizers and/or IP Economizers in a prior art design.

Now attention is directed to the modification of Figure 4. Figure 4 can include some of the same elements as Figure 3. Figure 4 shows HRSG hot gas flow in a direction from the inlet, indicated by arrows, through the upstream face 153' of an HP Economizer 155', through HP Economizer 155' and its downstream face 157', as described for Figure 3. Hence the hot gas flows to the upstream face 90' of a preheater booster 74', through booster 74' and its downstream face 93' toward and through the front face 96' of LP Evaporator 77'. The hot gas passes through the coil of LP Evaporator 77' and through its downstream face 100'.

Instead of the two feed water heater sections 103 and 106 described regarding Figure 3 which are placed generally side by side, the feed water heater 80' of Figure 4 has its sections containing coils arranged from front to rear, or upstream toward downstream, in series fashion. Feedwater heater 80' has a section 210 which is located farthest upstream of the three sections, with a second intermediate section 213 positioned downstream there from. Then downstream from second section 213 is the farthest downstream section, i.e., the third section 216. Each of sections 210, 213 and 216 have pairs of corresponding upstream faces and downstream faces 218 and 220, 222 and 224, and 226 and 228, respectively.

In Figure 4, a water to water heat exchanger 125' located exterior of duct 54', is similar to the exchanger 125 of Figure 3. In Fig. 4, condensate pump 52 discharges feedwater though a supply pipe 227 into the low temperature path 231 of the heat exchanger 125'. The feedwater leaves the low temperature path 231 of exchanger 125' to flow into connecting pipe 232.

Pipe 232 delivers the feedwater to the downstream face 228 of feedwater heater section 216. The water leaves section 216 at its upstream face 226 to flow through a transfer pipe 246 to connect with the inlet of section 210 at its downstream face 220. The water flows through the coil of section 210 to thence leave its upstream face 218 to flow into a transfer pipe 252. From pipe 252, the water flows to preheater booster 74' at its downstream face 93'. The water then passes through preheater heater booster 74' to exit preheater booster stream face 90' into a transfer pipe 255. Thence the water flows through pipe 255 to connect with the inlet of the high temperature path 258 of heat exchanger 125'.

Within the high temperature path 258 of heat exchanger 125', the temperature of the water decreases since it loses heat to water in the low temperature path 231. At the outlet of the high temperature path 258, the water enters transfer pipe 261 to feed into feedwater heater section 213 at its downstream face 224. The water flows through section 213 to exit therefrom at its upstream face 222, whereby the temperature of the water is raised, to then pass into a discharge pipe 264. Pipe 264 extends to connect with LP Evaporator 77' at its downstream face 100', to be heated therein. From the LP Evaporator 77', the water can flow from its upstream face 96', to the HP Economizer, for example.

Now, as with the Fig. 3 embodiment, the Fig. 4 embodiment will be discussed with exemplary temperatures. Description of the hot gas airflow through the HP Economizer 155' and through preheater booster 74' is similar to that described for Fig. 3 with the various pipes described acting as conduits. Exhaust gases from gas turbine "G", enter the upstream face 153' of the last of the Upstream Coils, here designated, for example, as HP Economizer 155. The gases enter the HP Economizer upstream face 153' at a temperature of about 260°C (500°F). Then the exhaust gases exit the HP Economizer face 157' at about 193°C (380°F), to next enter the upstream face 90' of preheater booster 74' at about that same temperature, and pass through booster 74' and its downstream face 93' at about 177°C (350°F). The hot gas then flows at about 177°C (350°F) through LP Evaporator 77' and exits its downstream face 100' at about 168°C (335°F).

Turning now to the most upstream of the feedwater heater sections, water leaves upstream face 218 of section 210, at a temperature of about 149°C (300°F). Then the water passes through pipe 252 to enter the downstream face 93' of preheater booster 74' at about 149°C (300°F). That water then passes through preheater booster 74' to its upstream face 90', to next exit through pipe 255 at about 171°C (340°F). The water then flows through pipe 255 into the high temperature path 258 of heat exchanger 125' at a temperature of about 171°C (340°F).

Water from the condensate pump 52 discharges water at about 49°C (120°F) into the heat exchanger 125' through pipe 227 at about that same temperature. Now a review of the temperatures of the water as it leaves the heat exchanger 125' is given. The water from the low temperature path 231 of heat exchanger 125' feeds into the pipe 232 at a temperature of about 110°C (230°F). From there, the water at about 110°C (230°F) enters the most downstream of the feedwater heater sections, section 216, at its downstream face 228. The water then passes through section 216 to enter its upstream face 226 into discharge pipe 246 at about 121°C (250°F). Through pipe 246 the water then enters feedwater section 210 at its downstream face 220 at about 121°C (250°F). The water then flows through section 210 and exits at its upstream face 218 through pipe 252 at a temperature of about 149°C (300°F).

The water exits heat exchanger 125' through its high temperature path 258 to enter pipe 261 at a temperature of about 110°C (230°F). The water flows through pipe 261 to enter the downstream face 224 of feedwater heater section 213 at about 110°C (230°F). The water exits section 213 at its upstream face 222 at a temperature of about 141°C (285°F) to pass through pipe 264 into LP Evaporator 77' at that temperature. Pipe 285 can also have a branch feeding off of it at 141°C (285°F) to the downstream face 157' of HP Economizer 155'.

Further, depending upon the arrangement of coils of a particular HRSG, water feeding off the upstream face 222 of section 213 can also flow at 141°C (285°F) to the downstream face of other coils located upstream of preheater booster 74', such as to the downstream face of an intermediate pressure (IP) economizer.

The temperature of the hot gas exiting the downstream face 100' of LP Evaporator 77' and entering at the upstream face 218 of feedwater heater section 210, is at about 168°C (335°F). The temperature of the hot gas exiting the feedwater heater section 210 at its downstream face 220 is about 146°C (295°F). The temperature of the hot gas exiting feedwater heater section 213 at its downstream face 224 is about 127°C (260°F). Finally, at the downstream face 228 of the farthest downstream feedwater section 216, the hot gas exits at about 116°C (240°F). Hence with the Fig. 4 embodiment, the surfaces of the tubes making up feedwater heater sections 210, 213 and 216 are maintained to be about 116°C (240°F) or higher. This temperature, as with Fig. 3 embodiment, is higher than the aforementioned dew point for condensation of sulphuric acid. Hence, the Fig. 4 embodiment resists the condensation of sulphuric acid on the surfaces of the tubes making up the section 210, 213 and 216.

As for the Fig. 3 embodiment, with the Fig. 4 embodiment, the heat exchanger 125' does not require recirculation, or a recirculation pump with its attendant overhead and expense. Also, as with Fig. 3 embodiment, the Fig. 4 embodiment does not require a bypass of any section of the feedwater heater 80'.

Further, with the present arrangement, the water temperature feeding into the LP Evaporator 77' from the feedwater preheater 80' enters at a temperature of 141°C (285°F) as compared to 121°C (250°F) for the temperature of water feeding into an LP Evaporator of a prior art system. Moreover, with the Fig. 4 embodiment, water temperature of 141°C (285°F) feeding from feedwater heater section 213 to the HP Economizer 155' or other economizer located upstream of the LP Evaporator, compares favorably to the water input temperature 121°C (250°F) to HP Economizers and/or IP Economizers in a prior art design.

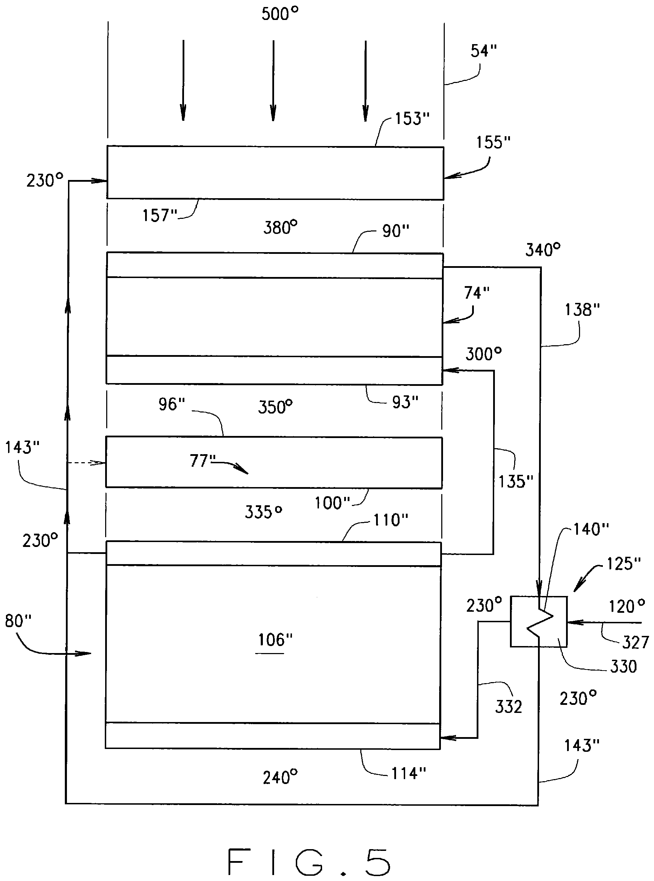

Figure 5 shows another embodiment that is less preferable than that of Fig. 3 and Fig. 4. In Fig. 5 the feedwater heater 80" comprises a single segment 106", rather than the two-section feedwater heater 80 such as illustrated in Fig. 3, or the three-section feedwater heater 80' shown in Fig. 4. In Fig. 5, the water to water heat exchanger 125", like the exchangers 125' and 125", has a high temperature path 140" through which water exits into pipe 143". Pipe 143", rather than extending to feed into the feedwater heater, extends to connect to feed into LP Evaporator 77" or into the HP Economizer 355, or to a heat exchanger coil upstream of HP Economizer 355.

In Fig. 5, the various pipes shown and described act as conduit for water flow. In Fig. 5 the water from the low temperature path 330 of water-to-water heat exchanger 125" exits exchanger 125" to feed into the pipe 332 at a temperature of about 110°C (230°F). From there the water, at about 110°C (230°F), enters near the downstream surface 114" of feed water heater 80". The water then passes through the feed water heater 80" to enter its upstream face 110" and then to exit at the upstream face 110" through pipe 135" at a temperature of about 149°C (300°F).

From the upstream face 110" of the feed water heater 80", the water passes through pipe 135" to enter the downstream face 93" of preheater booster 74" at about 149°C (300°F). That fluid leaves the preheater booster upstream face 90" through pipe 138" at about 171°C (340°F). Through pipe 138", the water then flows into the high temperature path 140" of heat exchanger 125" at about 60°C (140°F).

Other designs employing the inventive features can be embodied with feedwater heaters having more than three sections such as in Fig. 4's arrangement. For example four or five sections can be arrange in a fashion of being space from each other transversely as sections 103 and 16 are in Fig. 3, or spaced longitudinally as the sections 210, 213 and 216 are in Fig. 4.

Further, the embodiments have been illustrated with the entry of the water into the various heat exchangers being preferably at the downstream faces of the sections. However, less preferably the water could enter father upstream in the heat exchanger. Likewise the water is shown preferably as exiting various heat exchangers at a point at the upstream face of the heat exchanger, while less preferably the water could enter farther downstream from the upstream face.

The preheater booster coils versions 80, 80' and 80' have been illustrated in Figs. 3, 4 and 5 as preferably being downstream of the HP Economizers 155, 155' and 155", respectively. Such location of the preheater booster in Figs 3, 4 and 5 relative to the LP Evaporator and HP Economizer is believed to be the preferred and most efficient location for the preheater booster. The system is more efficient if the heat exchanger coils are positioned to remove heat from exhaust gas where the gas temperature surrounding the coils is closer to the water temperature inside the coils. If the preheater booster were located farther upstream to be upstream of the HP Economizer, the preheater booster would be removing energy from gas which energy would thence be unavailable to be removed by coils downstream from the preheater booster in such location. Therefore, to so locate the preheater booster coils would take away energy from other potential upstream higher temperature coils that would be thence downstream of the preheater booster, which coils need the energy for heating the water or steam.

However, the preheater booster coils can also be located upstream of the HP Economizer and provide higher temperature water to the infeed of the water to water heat exchangers such as illustrated at 125, 125' and 125". In such a case, the differential of the temperature of the gas surrounding the preheater booster coils to the water temperature inside the preheater booster coils would be higher than for the systems specifically illustrated in Figs 3, 4 and 5. Thus such a system would be less efficient in view of the above comment that the system is more efficient if the heat exchanger coils are positioned to remove heat from exhaust gas where the gas temperature surrounding the coils is closer to the water temperature inside the coils. Nevertheless, with such a location the temperature of the water leaving the preheater booster coils to be fed through pipes such as 138, 138' and 138" into the water to water heat exchangers such as illustrated at 125, 125' and 125", would be sufficiently high to keep the surface temperature of the coils of the corresponding feedwater heater above the aforementioned dew point of sulphuric acid.

The connections of the various discussed pipes have been described as preferably at the downstream or upstream faces of the heat exchangers such as the feedwater heater sections, the preheater booster, the LP Evaporator and the HP Economizer. However less preferably the connections of the various pipes can be otherwise near the downstream face or upstream face of such components.

Changes can be made in the above constructions without departing from the scope of the attached claims, it is intended that all matter contained in the above description or shown in the accompanying drawings shall be interpreted as illustrative and not in a limiting sense.

## Claims

1. A heat recovery steam generator (50) comprising:
a casing (53) having an inlet (56) and an outlet (59) and a gas flow path there between for gas flow upstream from the inlet (56) toward the outlet (59) downstream therefrom;
low pressure evaporator coils (77, 77', 77") of heat exchanger tubes, the low pressure evaporator coils (77, 77', 77") located within the casing (53) downstream from the inlet (56);
preheater booster coils (74, 74', 74") of heat exchanger tubes, the preheater booster coils (74, 74', 74") located within the casing (53) downstream from the casing inlet (56) and upstream of the low pressure evaporator coils (77, 77', 77"), so that gas passing through the inlet (56) can flow downstream to pass through the preheater booster coils (74, 74', 74"), and gas passing through the preheater booster coils (74, 74', 74") can flow downstream therefrom;
feedwater heater coils (80, 80', 80") of heat exchanger tubes, the feedwater heater coils (80, 80', 80") located within the casing (53) downstream from the low pressure evaporator coils (77, 77', 77") so that gas passing through the low pressure evaporator coils (77, 77', 77") can flow downstream from the low pressure evaporator coils (77, 77', 77") to pass through the feedwater heater coils (80, 80', 80");
a water to water heat exchanger (125, 125', 125") having a low temperature path (130, 231, 330) and a higher temperature path (140, 258, 140");
a first conduit (138, 255, 138") extending from flow connection with the preheater booster coils (74, 74', 74") to flow connection with the high temperature path (140, 258, 140") of the water to water heat exchanger (125, 125', 125"), the first conduit (138, 255, 138") configured for water to flow there through from the preheater booster coils (74, 74', 74") to the water to water heat exchanger (125, 125', 125"); and
a second conduit (135, 252, 135") extending from the feedwater heater coils (80, 80', 80") to the preheater booster coils (74, 74', 74") of heat exchanger tubes, the second conduit (135, 252, 135") configured to allow water to flow there through from the feedwater heater coils (80, 80', 80") to the preheater booster coils (74, 74', 74").

2. The heat recovery steam generator (50) of claim 1, wherein the preheater booster coils (74, 74', 74") have an upstream face (90, 90', 90"), and the first conduit (138, 255, 138") exits the preheater booster coils (74, 74', 74") near the upstream face (90, 90', 90") of the preheater booster coils (74, 74', 74").

3. The heat recovery steam generator (50) of claim 2, wherein the preheater booster coils (74, 74', 74") have a downstream face (93, 93', 93"), and feedwater heater coils (80, 80', 80") have an upstream face (110, 218,110"), and the second conduit (135, 252, 135") exits the feedwater heater coils (80, 80', 80") near the upstream face (110, 218,110") of the feedwater heater coils (80, 80', 80") to extend to flow connection with the preheater booster coils (74, 74', 74") near the downstream face (93, 93', 93") of the preheater booster coils (74, 74', 74").

4. The heat recovery steam generator (50) of claim 3, further comprising a conduit (150, 264, 143") configured to extend for flow connection from the feedwater heater coils (80, 80', 80") to the low pressure evaporator coils (77, 77', 77") of heat exchanger tubes.

5. The heat recovery steam generator (50) of claim 3, further comprising a conduit (143, 261, 332) configured to extend for flow connection from the water-to-water heat exchanger (125, 125', 125") to be in flow connection with the feedwater heater coils (80, 80', 80") to allow flow from the water to water heat exchanger (125, 125', 125") to the feedwater heater coils (80, 80', 80").

6. The heat recovery steam generator (50) of claim 1, further comprising high pressure economizer coils (155, 155', 155") of heat exchanger tubes located upstream of the preheater booster coils (74, 74', 74"), and a conduit (150, 264, 143") configured to extend for flow connection from the feedwater heater coils (80, 80', 80") to the high pressure economizer coils (155, 155', 155") of heat exchanger tubes.

7. The heat recovery steam generator (50) of claim 6, further comprising additional upstream coils (70) of heat exchanger tubes, the said additional upstream coils (70) located within the casing (53) upstream of the high pressure economizer coils (155, 155', 155") and downstream from the casing inlet (56) so that gas coming from the inlet (56) can flow downstream through the said additional upstream coils (70) and thereafter flow through the high pressure economizer coils (155, 155', 155").

8. The heat recovery steam generator (50) of claim 1 wherein the feedwater heater coils (80, 80', 80") comprise a first section (106) and a second section (103), and wherein the second conduit (135) extends from the first feedwater heater section (106) to the preheater booster coils (74, 74', 74").

9. The heat recovery steam generator (50) of claim 8, further comprising the first feedwater heater section (106) having an upstream face (110) and a downstream face (114), and wherein the second conduit (135) extends for flow connection from near the upstream face (110) of the said first section (106) to flow connection with the preheater booster coils (74, 74', 74"), and further comprising a third conduit (132) extending from flow connection with the water to water heat exchanger (125) to flow connection near the downstream face (114) of the first feedwater heater section (106).

10. The heat recovery steam generator (50) of claim 2, further comprising the feedwater heater coils (80") having a first section (210), second section (213) and third section (216), and wherein:
the first feedwater section (210) has an upstream face (218) and a downstream face (220) and wherein the second conduit (252) flows from near the upstream face (218) of the said first feedwater section (210) to near the downstream face (93') of the preheater booster coils (74');
the second feedwater heater section (213) has an upstream face (222) and a downstream face (224), and a third conduit (261) extending from flow connection to the water to water heat exchanger (125') to flow connection near the downstream face (224) of the second feedwater heater section (213), the said third conduit (261) configured for water to flow there through from the water to water heat exchanger (125') to the second feedwater heater section (213); and
said third feedwater heater section (216) has an upstream face (226) and a downstream face (228), and wherein a fourth conduit (246) extends from near the upstream face (226) of the third feedwater heater section (216) to near the downstream face (220) of the first feedwater heater section (210), the said fourth conduit (246) configured for water to flow there through from the third feedwater heater section (216) to the first feedwater heater section (210).

11. The heat recovery steam generator (50) of claim 10 further comprising a conduit (264) flowing from near the upstream face (222) of the second section (213) of the feedwater heater coils (80') to connection with one of the low pressure evaporator coils (77') or high pressure economizer coils (155').

12. The heat recovery steam generator (50) of claim 11, further comprising: high pressure economizer coils (155') of heat exchanger tubes located upstream of the preheater booster coils (74'), and a conduit (264) configured to extend for flow connection from the feedwater heater coils (80') to the high pressure economizer coils (155) of heat exchanger tubes; and additional upstream coils (70) of heat exchanger tubes, the said additional upstream coils (70) located within the casing (53) upstream of the high pressure economizer coils (155') and downstream from the casing inlet (56) so that gas coming from the inlet (56) can flow downstream through the said additional upstream coils (70) and thereafter flow through the high pressure economizer coils (155').

13. The heat recovery steam generator (50) of claim 10, further comprising the first feedwater section (210) being upstream of the second feedwater heater section (213), and the second feedwater heater section (213) being upstream of the said third feedwater heater section (216).

14. The heat recovery steam generator (50) of claim 13, further comprising a fifth conduit (232) configured to extend for flow connection from the water-to-water heat exchanger (125') to near the downstream face (228) of the third feedwater heater section (216) to be in flow connection with the feedwater heater coils of the third feedwater heater section (216) to allow flow from the water to water heat exchanger (125') to the feedwater heater coils of the third feedwater heater section (216).

15. The heat recovery steam generator (50) of claim 14, further comprising: high pressure economizer coils (155') of heat exchanger tubes located upstream of the preheater booster coils (74'); and a sixth conduit (264) configured to extend for flow connection from near the upstream face (222) of the second feedwater heater section (213) to flow connection with one of the low pressure evaporator coils (77') or high pressure economizer coils (155').

16. The heat recovery steam generator (50) of claim 15, further comprising additional upstream coils (70) of heat exchanger tubes, the said additional upstream coils (70) located within the casing (53) upstream of the high pressure economizer coils (155') and downstream from the casing inlet (56) so that gas coming from the inlet (56) can flow downstream through the said additional upstream coils (70) and thereafter flow through the high pressure economizer coils (155').

17. A process for heating feedwater for a heat recovery steam generator (HRSG) (50) which HRSG (50) has:
a casing (53) having an inlet (56) and an outlet (59) and an internal gas exhaust flow path there between, comprising:
a water-to-water heat exchanger (125, 125', 125") positioned to be external to the internal gas exhaust flow path of the HRSG, the external water-to-water heat exchanger (125, 125', 125") having a low temperature path (130, 231, 330) and a higher temperature path (140, 258, 140");
low pressure evaporator coils (77, 77', 77") of heat exchanger tubes, the low pressure evaporator coils (77, 77', 77") located within the casing downstream from the inlet;
preheater booster coils (74, 74', 74") of heat exchanger tubes, the preheater booster coils (74, 74', 74") located within the casing (53) downstream from the casing inlet (56) and upstream of the low pressure evaporator coils (77, 77', 77"), so that gas passing through the inlet (56) can flow downstream to pass through the preheater booster coils (74, 74', 74"), and gas passing through the preheater booster coils (74, 74', 74") can flow downstream therefrom;
feedwater heater coils (80, 80', 80") of heat exchanger tubes, the feedwater heater coils (80, 80', 80") located within the casing (53) downstream from the low pressure evaporator coils (77, 77', 77") so that gas passing through the low pressure evaporator coils (77, 77', 77") can flow downstream from the low pressure evaporator coils (77, 77', 77") to pass through the feedwater heater coils (80, 80', 80");
a first conduit (138, 255, 138") extending from flow connection with the preheater booster coils (74, 74', 74") to flow connection with the high temperature path (140, 258, 140") of the water to water heat exchanger (125, 125', 125"); and
a second conduit (135, 252, 135") extending from the feedwater heater coils (80, 80', 80") to the preheater booster coils (74, 74', 74") of heat exchanger tubes;
the process comprising the steps of:
directing water to flow through the first conduit (138, 255, 138") from the preheater booster coils (74, 74', 74") to the higher temperature path (140, 258, 140") of the water to water heat exchanger (125, 125', 125"); and
directing water to flow through the second conduit (135, 252, 135") from the feedwater heater coils (80, 80', 80") to the preheater booster coils (74, 74', 74") of heat exchanger tubes.

18. The process of Claim 17, wherein the preheater booster coils (74, 74', 74") have an upstream face (90, 90', 90"), and a downstream face (93, 93', 93"), and the feedwater heater coils (80, 80', 80") have an upstream face (110, 218, 110"); a third conduit (132, 232, 332) extending from the water-to-water heat exchanger (125, 125', 125") to the feedwater heater coils (80, 80', 80");
further comprising the steps of:
directing water to exit the preheater booster coils (74, 74', 74") through the first conduit (138, 255, 138") near the upstream face (90, 90', 90") of the preheater booster coils (74, 74', 74") to flow into the higher temperature path (140, 258, 140") of the water to water heat exchanger (125, 125', 125");
directing water from the feedwater heater coils (80, 80', 80") near the upstream face (110, 218, 110") of the feedwater heater coils (80, 80', 80") through the second conduit (135, 252, 135") to flow into connection with the preheater booster coils (74, 74', 74") near the downstream face (93, 93', 93") of the preheater booster coils (74, 74', 74"); and
directing water to flow through the third conduit (132, 232, 332) from the water-to-water heat exchanger (125, 125', 125") to the feedwater heater coils (80, 80', 80").

19. The process of Claim 18, wherein the HRSG (50) has a conduit (150, 264, 143") extending from the feedwater heater coils (80, 80', 80") to the low pressure evaporator coils (77, 77', 77") of heat exchanger tubes; and high pressure economizer coils (155, 155', 155") of heat exchanger tubes located upstream of the preheater booster coils (74, 74', 74") and a conduit (150, 264, 143") extending from the feedwater heating coils (80, 80', 80") to the high pressure economizer coils (155, 155', 155");
further comprising the steps of:
directing water from the feedwater heater coils (80, 80', 80") to flow to one of the low pressure evaporator coils (77, 77', 77") or the high pressure economizer coils (155, 155', 155").

20. The process of Claim 17, wherein the feedwater heater coils (80) comprise a first section (106) and a second section (103), the first feedwater heater section (106) having an upstream face (110) and a downstream face (114), wherein the feedwater heater second conduit (135) extends for flow connection from near the upstream face (110) of the first feedwater heater section (106) to flow connection with the preheater booster coils (74), and a third conduit (132) extending from flow connection with the water to water heat exchanger (125) to flow connection near the downstream face (112) of the second feedwater heater section (103);
further comprising the steps of:
directing water through the second conduit (132) from near the upstream face (110) of the said first feedwater heater section (106) to flow into the preheater booster coils (74); and
directing water through the third conduit (143) from the water to water heat exchanger (125) to flow into the first feedwater heater section (106) near the downstream face (114) of the first feedwater heater section (106).

21. The process of Claim 20, wherein the preheater booster coils (74) have an upstream face (90), and a downstream face (93);
further comprising the steps of:
directing water through the first conduit (138) to flow from near the upstream face (90) of the preheater booster coils (74) to the higher temperature path (140) of the water to water heat exchanger (125, 125', 125").

22. The process of Claim 21, wherein the second feedwater heater section (103) has an upstream face (108) and a downstream face (112), and including a fourth conduit (143) extending from the water to water heat exchanger (125) to near the downstream face (112) of the second feedwater heater section (103); and
further comprising the step of directing water to flow from the water to water heat exchanger (125) into the second feedwater heater section (103) near the downstream face (112) of the second feedwater heater section (103).

23. The process of Claim 22, including a conduit (150) extending for flow connection from near the upstream face (108) of the second section (103) of the feedwater heater to connection with one of the low pressure evaporator coils (77) or high pressure economizer coils (155);
further comprising the step of directing water from near the upstream face (108) of the second section (103) of the feedwater heater (80) to one of the low pressure evaporator coils (77) or high pressure economizer coils (155).

24. The process of Claim 17 wherein the feedwater heater (80') has a first section (210), second section (213) and third section (216), and wherein:
the first feedwater section (210) has an upstream face (218) and a downstream face (220) and the second conduit (252) flows from near the upstream face (218) of the first feedwater heater section (210) to near the downstream face (93) of the preheater booster coils (74'),
the second feedwater heater section (213) has an upstream face (222) and a downstream face (224), and a third conduit (261) extends from the water to water heat exchanger (125') to connection near the downstream face (224) of the second feedwater heater section (213); and
the third feedwater heater section (216) has an upstream face (226) and a downstream face (228), and a fourth conduit (246) extends from near the upstream face (226) of the third feedwater heater section (216) to near the downstream face (220) of the first feedwater heater section (210);
further comprising the steps of:
directing water to flow from near the upstream face (218) of the first feedwater heater section (210) to near the downstream face (93') of the preheater booster coils (74'),
directing water to flow from the water to water heat exchanger (125') to near the downstream face (224) of the second feedwater heater section (213); and
directing water to flow from near the upstream face (226) of the third feedwater heater section (216) to near the downstream face (220) of the first feedwater heater section (210).

25. The process of Claim 24, wherein the first feedwater section (210) is upstream of the second feedwater heater section (213), and the second feedwater heater section (213) is upstream of the third feedwater heater section (216); and a fifth conduit (232) extending from the water-to-water heat exchanger (125') to connect near the downstream face of the third feedwater heater (216);
further comprising the steps of:
directing water to flow from the water to water heat exchanger (125') to the third feedwater heater section (216) near the downstream face (228) of the third feedwater heater section (216).

26. The process of Claim 25, wherein there is a sixth conduit (264) extending for flow connection from near the upstream face (222) of the second feedwater heater section (213) to one of the low pressure evaporator coils (77') or high pressure economizer coils (155');
further comprising the step of directing water to flow from near the upstream face (222) of the second section (213) of the feedwater heater (80') to one of the low pressure evaporator coils (77') or high pressure economizer coils (155').

27. The process of Claim 18, wherein the temperature of the feedwater entering the low temperature path (130, 231, 330) of the water-to-water heat exchanger initially has a temperature below that of the dew point of sulfuric acid in the exhaust gas, and the feedwater from the water-to-water heat exchanger (125, 125', 125") to the feedwater heater coils (80, 80', 80") enters the feedwater heater coils at a temperature at or above 230°F.

28. The process of Claim 22, wherein the temperature of the feedwater entering the low temperature path (130) of the water-to-water heat exchanger (125) initially has a temperature below that of the dew point of sulfuric acid in the exhaust gas, the feedwater from the third conduit (132) flowing from the external water-to-water heat exchanger (125) to the first feedwater heater section (106) enters the inlet of the first feedwater heater section (106) at a temperature at or above 230°F, and the feedwater from the fourth conduit (143) flowing from the water-to-water heat exchanger (125) to the second feedwater heater section (103) enters the second feedwater heater section (103) at a temperature at or above 230°F.

29. The process of Claim 25, wherein the temperature of the feedwater entering the low temperature path (231) of the water-to-water heat exchanger (125') initially has a temperature below that of the dew point of sulfuric acid in the exhaust gas, the feedwater from the fifth conduit (232) flowing from the water-to-water heat exchanger (125') to the third feedwater heater section (216) enters the third feedwater heater section (216) at a temperature at or above 230°F, and the feedwater from the third conduit (261) flowing from the water-to-water heat exchanger (125') to the second feedwater heater section (213) enters the second feedwater heater section (213) at a temperature at or above 230°F.

## Patentansprüche

1. Wärmerückgewinnungsdampfgenerator (50), umfassend:
ein Gehäuse (53) mit einem Einlass (56), einem Auslass (59) und einem Gasfließweg dazwischen für einen Gasfluss stromaufwärts von dem Einlass (56) zu dem Auslass (59), der stromabwärts davon liegt;
Niederdruck-Verdampferschlangen (77, 77', 77") von Wärmetauscherrohren, wobei sich die Niederdruck-Verdampferschlangen (77, 77', 77") innerhalb des Gehäuses (53) stromabwärts von dem Einlass (56) befinden;
Vorwärmer-Booster-Schlangen (74, 74', 74") von Wärmetauscherrohren, wobei sich die Vorwärmer-Booster-Schlangen (74, 74', 74") innerhalb des Gehäuses (53) stromabwärts von dem Gehäuseeinlass (56) und stromaufwärts von den Niederdruck-Verdampferschlangen (77, 77', 77") befinden, so dass Gas, das durch den Einlass (56) hindurchtritt, stromabwärts fließen kann, um durch die Vorwärmer-Booster-Schlangen (74, 74', 74") hindurchzutreten, und Gas, das durch die Vorwärmer-Booster-Schlangen (74, 74', 74") fließt, stromabwärts davon fließen kann;
Speisewasserheizschlangen (80, 80', 80") von Wärmetauscherrohren, wobei sich die Speisewasserheizschlangen (80, 80', 80") innerhalb des Gehäuses (53) stromabwärts von den Niederdruck-Verdampferschlangen (77, 77', 77") befinden, so dass Gas, das durch die Niederdruck-Verdampferschlangen (77, 77', 77") hindurchtritt, stromabwärts von den Niederdruck-Verdampferschlangen (77, 77', 77") fließen kann, um durch die Speisewasserheizschlangen (80, 80', 80") hindurchzutreten;
einen Wasser-Wasser-Wärmetauscher (125, 125', 125") mit einem niedrigen Temperaturpfad (130, 231, 330) und einem höheren Temperaturpfad (140, 258, 140");
eine erste Leitung (138, 255, 138"), die sich von einer Durchflussverbindung mit den Vorwärmer-Booster-Schlangen (74, 74', 74") zu einer Durchflussverbindung mit dem höheren Temperaturpfad (140, 258, 140") des Wasser-Wasser-Wärmetauschers (125, 125', 125") erstreckt, wobei die erste Leitung (138, 255, 138") dafür ausgelegt ist, dass Wasser durch sie von den Vorwärmer-Booster-Schlangen (74, 74', 74") zu dem Wasser-Wasser-Wärmetauscher (125, 125', 125") fließt; und
eine zweite Leitung (135, 252, 135"), die sich von den Speisewasserheizschlangen (80, 80', 80") zu den Vorwärmer-Booster-Schlangen (74, 74', 74") von Wärmetauscherrohren erstreckt, wobei die zweite Leitung (135, 252, 135") dafür ausgelegt ist, dass Wasser durch sie hindurch von den Speisewasserheizschlangen (80, 80', 80") zu den Vorwärmer-Booster-Schlangen (74, 74', 74") fließen kann.

2. Wärmerückgewinnungsdampfgenerator (50) nach Anspruch 1, wobei die Vorwärmer-Booster-Schlangen (74, 74', 74") eine Stromaufwärtsseite (90, 90', 90") haben und die erste Leitung (138, 255, 138") nahe der Stromaufwärtsseite (90, 90', 90") von den Vorwärmer-Booster-Schlangen (74, 74', 74") aus den Vorwärmer-Booster-Schlangen (74, 74', 74") austritt.

3. Wärmerückgewinnungsdampfgenerator (50) nach Anspruch 2, wobei die Vorwärmer-Booster-Schlangen (74, 74', 74") eine Stromabwärtsseite (93, 93', 93") haben und die Speisewasserheizschlangen (80, 80', 80") eine Stromaufwärtsseite (110, 218, 110") haben und die zweite Leitung (135, 252, 135") nahe der Stromaufwärtsseite (110, 218, 110") der Speisewasserheizschlangen (80, 80', 80") aus den Speisewasserheizschlangen (80, 80', 80") austritt, um sich zur Durchflussverbindung mit den Vorwärmer-Booster-Schlangen (74, 74', 74") nahe der Stromabwärtsseite (93, 93', 93") der Vorwärmer-Booster-Schlangen (74, 74', 74") zu erstrecken.

4. Wärmerückgewinnungsdampfgenerator (50) nach Anspruch 3, ferner umfassend eine Leitung (150, 264, 143"), ausgelegt zum Erstrecken für eine Durchflussverbindung von den Speisewasserheizschlangen (80, 80', 80") zu den Niederdruck-Verdampferschlangen (77, 77', 77") von Wärmetauscherrohren.

5. Wärmerückgewinnungsdampfgenerator (50) nach Anspruch 3, ferner umfassend eine Leitung (143, 261, 332), ausgelegt zum Erstrecken für eine Durchflussverbindung von dem Wasser-Wasser-Wärmetauscher (125, 125', 125"), um in einer Durchflussverbindung mit den Speisewasserheizschlangen (80, 80', 80") zu sein, um einen Fluss von dem Wasser-Wasser-Wärmetauscher (125, 125', 125") zu den Speisewasserheizschlangen (80, 80', 80") zu ermöglichen.

6. Wärmerückgewinnungsdampfgenerator (50) nach Anspruch 1, ferner umfassend Hochdruck-Economizer-Schlangen (155, 155', 155") von Wärmetauscherrohren, die sich stromaufwärts von den Vorwärmer-Booster-Schlangen (74, 74', 74") befinden, und eine Leitung (150, 264, 143"), ausgelegt zum Erstrecken für eine Durchflussverbindung von den Speisewasserheizschlangen (80, 80', 80") zu den Hochdruck-Economizer-Schlangen (155, 155', 155") von Wärmetauscherrohren.

7. Wärmerückgewinnungsdampfgenerator (50) nach Anspruch 6, ferner umfassend zusätzliche Stromaufwärtsschlangen (70) von Wärmetauscherrohren, wobei sich die zusätzlichen Stromaufwärtsschlangen (70) innerhalb des Gehäuses (53) stromaufwärts von den Hochdruck-Economizer-Schlangen (155, 155', 155") und stromabwärts von dem Gehäuseeinlass (56) befinden, so dass Gas, das von dem Einlass (56) kommt, stromabwärts durch die zusätzlichen Stromaufwärtsschlangen (70) und danach durch die Hochdruck-Economizer-Schlangen (155, 155', 155") fließen kann.

8. Wärmerückgewinnungsdampfgenerator (50) nach Anspruch 1, wobei die Speisewasserheizschlangen (80, 80', 80") einen ersten Abschnitt (106) und einen zweiten Abschnitt (103) umfassen, und wobei sich die zweite Leitung (135) von dem ersten Speisewasserheizabschnitt (106) zu den Vorwärmer-Booster-Schlangen (74, 74', 74") erstreckt.

9. Wärmerückgewinnungsdampfgenerator (50) nach Anspruch 8, ferner umfassend den ersten Speisewasserheizabschnitt (106) mit einer Stromaufwärtsseite (110) und einer Stromabwärtsseite (114), wobei sich die zweite Leitung (135) für eine Durchflussverbindung von nahe der Stromaufwärtsseite (110) des ersten Abschnitts (106) zu einer Durchflussverbindung mit den Vorwärmer-Booster-Schlangen (74, 74', 74") erstreckt, und ferner umfassend eine dritte Leitung (132), die sich von einer Durchflussverbindung mit dem Wasser-Wasser-Wärmetauscher (125) zu einer Durchflussverbindung nahe der Stromabwärtsseit e (114) von dem ersten Speisewasserheizabschnitt (106) erstreckt.

10. Wärmerückgewinnungsdampfgenerator (50) nach Anspruch 2, ferner umfassend die Speisewasserheizschlangen (80") mit einem ersten Abschnitt (210), einem zweiten Abschnitt (213) und einem dritten Abschnitt (216), wobei:
der erste Speisewasserabschnitt (210) eine Stromaufwärtsseite (218) und eine Stromabwärtsseite (220) hat und wobei die zweite Leitung (252) von nahe der Stromaufwärtsseite (218) von dem ersten Speisewasserabschnitt (210) nach nahe der Stromabwärtsseite (93') von den Vorwärmer-Booster-Schlangen (74') fließt;
der zweite Speisewasserheizabschnitt (213) eine Stromaufwärtsseite (222) und eine Stromabwärtsseite (224) sowie eine dritte Leitung (261) hat, die sich von einer Durchflussverbindung zu dem Wasser-Wasser-Wärmetauscher (125') zu einer Durchflussverbindung nahe der Stromabwärtsseite (224) von dem zweiten Speisewasserheizabschnitts (213) erstreckt, die dritte Leitung dafür ausgelegt ist, dass durch sie Wasser von dem Wasser-Wasser-Wärmetauscher (125') zu dem zweiten Speisewasserheizabschnitt (213) fließt; und
der dritte Speisewasserheizabschnitt (216) eine Stromaufwärtsseite (226) und eine Stromabwärtsseite (228) hat und wobei sich eine vierte Leitung (246) von nahe der Stromaufwärtsseite (226) von dem dritten Speisewasserheizabschnitts (216) nach nahe der Stromabwärtsseite (220) von dem ersten Speisewasserheizabschnitts (210) erstreckt, wobei die vierte Leitung (246) dafür ausgelegt ist, dass durch sie Wasser von dem dritten Speisewasserheizabschnitt (216) zu dem ersten Speisewasserheizabschnitt (210) fließt.

11. Wärmerückgewinnungsdampfgenerator (50) nach Anspruch 10, ferner umfassend eine Leitung (264), die von nahe der Stromaufwärtsseite (222) des zweiten Abschnitts (213) der Speisewasserheizschlangen (80') zur Verbindung mit einer der Niederdruck-Verdampferschlangen (77') oder Hochdruck-Economizer-Schlangen (155') fließt.

12. Wärmerückgewinnungsdampfgenerator (50) nach Anspruch 11, ferner umfassend: Hochdruck-Economizer-Schlangen (155') von Wärmetauscherrohren, die sich stromaufwärts von den Vorwärmer-Booster-Schlangen (74') befinden, und eine Leitung (264), ausgelegt zum Erstrecken für eine Durchflussverbindung von den Speisewasserheizschlangen (80') zu den Hochdruck-Economizer-Schlangen (155) von Wärmetauscherrohren; und zusätzliche Stromaufwärtsschlangen (70) von Wärmetauscherrohren, wobei sich die zusätzlichen Stromaufwärtsschlangen (70) innerhalb des Gehäuses (53) stromaufwärts von den Hochdruck-Economizer-Schlangen (155') und stromabwärts von dem Gehäuseeinlass (56) befinden, so dass Gas, das von dem Einlass (56) kommt, stromabwärts durch die zusätzlichen Stromaufwärtsschlangen (70) fließen und danach durch die Hochdruck-Economizer-Schlangen (155') fließen kann.

13. Wärmerückgewinnungsdampfgenerator (50) nach Anspruch 10, ferner umfassend den ersten Speisewasserabschnitt (210), der stromaufwärts von dem zweiten Speisewasserheizabschnitt (213) ist, und den zweiten Speisewasserheizabschnitt (213), der stromaufwärts von dem dritten Speisewasserheizabschnitt (216) ist.

14. Wärmerückgewinnungsdampfgenerator (50) nach Anspruch 13, ferner umfassend eine fünfte Leitung (232), ausgelegt zum Erstrecken für eine Durchflussverbindung von dem Wasser-Wasser-Wärmetauscher (125') bis nahe der Stromabwärtsseite (228) von dem dritten Speisewasserheizabschnitt (216), um in einer Durchflussverbindung mit den Speisewasserheizschlangen von dem dritten Speisewasserheizabschnitt (216) zu sein, um einen Fluss von dem Wasser-Wasser-Wärmetauscher (125') zu den Speisewasserheizschlangen von dem dritten Speisewasserheizabschnitt (216) zu ermöglichen.

15. Wärmerückgewinnungsdampfgenerator (50) nach Anspruch 14, ferner umfassend: Hochdruck-Economizer-Schlangen (155') von Wärmetauscherrohren, die sich stromaufwärts von den Vorwärmer-Booster-Schlangen (74') befinden; und eine sechste Leitung (264), ausgelegt zum Erstrecken für eine Durchflussverbindung von nahe der Stromaufwärtsseite (222) von dem zweiten Speisewasserheizabschnitt (213) zu einer Durchflussverbindung mit einen von den Niederdruck-Verdampferschlangen (77') oder den Hochdruck-Economizer-Schlangen (155').

16. Wärmerückgewinnungsdampfgenerator (50) nach Anspruch 15, ferner umfassend zusätzliche Stromaufwärtsschlangen (70) von Wärmetauscherrohren, wobei sich die zusätzlichen Stromaufwärtsschlangen (70) innerhalb des Gehäuses (53) stromaufwärts von den Hochdruck-Economizer-Schlangen (155') und stromabwärts von dem Gehäuseeinlass (56) befinden, so dass Gas, das von dem Einlass (56) kommt, stromabwärts durch die zusätzlichen Stromaufwärtsschlangen (70) fließen und danach durch die Hochdruck-Economizer-Schlangen (155') fließen kann.

17. Verfahren zum Heizen von Speisewasser für einen Wärmerückgewinnungsdampfgenerator (HRSG) (50), wobei der HRSG (50) Folgendes aufweist:
ein Gehäuse (53) mit einem Einlass (56), einem Auslass (59) und einem internen Gasauslassfließweg dazwischen, umfassend:
einen Wasser-Wasser-Wärmetauscher (125, 125', 125"), der so positioniert ist, dass er außerhalb des internen Gasauslassfließwegs des HRSG ist, wobei der externe Wasser-Wasser-Wärmetauscher (125, 125', 125") einen niedrigen Temperaturpfad (130, 231, 330) und einen höheren Temperaturpfad (140, 258, 140") aufweist;
Niederdruck-Verdampferschlangen (77, 77', 77") von Wärmetauscherrohren, wobei sich die Niederdruck-Verdampferschlangen (77, 77', 77") innerhalb des Gehäuses stromabwärts von dem Einlass befinden;
Vorwärmer-Booster-Schlangen (74, 74', 74") von Wärmetauscherrohren, wobei sich die Vorwärmer-Booster-Schlangen (74, 74', 74") innerhalb des Gehäuses (53) stromabwärts von dem Gehäuseeinlass (56) und stromaufwärts von den Niederdruck-Verdampferschlangen (77, 77', 77") befinden, so dass Gas, das durch den Einlass (56) hindurchtritt, stromabwärts zum Hindurchtreten durch die Vorwärmer-Booster-Schlangen (74, 74', 74") fließen kann, und Gas, das durch die Vorwärmer-Booster-Schlangen (74, 74', 74") hindurchtritt, stromabwärts davon fließen kann;
Speisewasserheizschlangen (80, 80', 80") von Wärmetauscherrohren, wobei sich die Speisewasserheizschlangen (80, 80', 80") innerhalb des Gehäuses (53) stromabwärts von den Niederdruck-Verdampferschlangen (77, 77', 77") befinden, so dass Gas, das durch die Niederdruck-Verdampferschlangen (77, 77', 77") hindurchtritt, stromabwärts von den Niederdruck-Verdampferschlangen (77, 77', 77") fließen kann, um durch die Speisewasserheizschlangen (80, 80', 80") hindurchzutreten;
eine erste Leitung (138, 255, 138"), die sich von einer Durchflussverbindung mit den Vorwärmer-Booster-Schlangen (74, 74', 74") zu einer Durchflussverbindung mit dem höheren Temperaturpfad (140, 258, 140") von dem Wasser-Wasser-Wärmetauscher (125, 125', 125") erstreckt; und
eine zweite Leitung (135, 252, 135"), die sich von den Speisewasserheizschlangen (80, 80', 80") zu den Vorwärmer-Booster-Schlangen (74, 74', 74") von Wärmetauscherrohren erstreckt;
wobei das Verfahren folgende Schritte umfasst:
Leiten von Wasser zum Fließen durch die erste Leitung (138, 255, 138") der Vorwärmer-Booster-Schlangen (74, 74', 74") zu dem höheren Temperaturpfad (140, 258, 140") des Wasser-Wasser-Wärmetauschers (125, 125', 125"); und
Leiten von Wasser zum Fließen durch die zweite Leitung (135, 252, 135") der Speisewasserheizschlangen (80, 80', 80") zu den Vorwärmer-Booster-Schlangen (74, 74', 74") von Wärmetauscherrohren, umfasst.

18. Verfahren nach Anspruch 17, wobei die Vorwärmer-Booster-Schlangen (74, 74', 74") eine Stromaufwärtsseite (90, 90', 90") und eine Stromabwärtsseite (93, 93', 93") haben und die Speisewasserheizschlangen (80, 80', 80") eine Stromaufwärtsseite (110, 218, 110") haben; und sich eine dritte Leitung (132, 232, 332) von dem Wasser-Wasser-Wärmetauscher (125, 125', 125") zu den Speisewasserheizschlangen (80, 80', 80") erstreckt;
ferner folgende Schritte umfassend:
Leiten von Wasser zum Verlassen der Vorwärmer-Booster-Schlangen (74, 74', 74") durch die erste Leitung (138, 255, 138") nahe der Stromaufwärtsseite (90, 90', 90") der Vorwärmer-Booster-Schlangen (74, 74', 74") zum Fließen in den höheren Temperaturpfad (140, 258, 140") des Wasser-Wasser-Wärmetauscher (125, 125', 125");
Leiten von Wasser aus den Speisewasserheizschlangen (80, 80', 80") nahe der Stromaufwärtsseite (110, 218, 110") der Speisewasserheizschlangen (80, 80', 80") durch die zweite Leitung (135, 252, 135") zum Fließen in eine Verbindung mit den Vorwärmer-Booster-Schlangen (74, 74', 74") nahe der Stromabwärtsseite (93, 93', 93") der Vorwärmer-Booster-Schlangen (74, 74', 74"); und
Leiten von Wasser zum Fließen durch die dritte Leitung (132, 232, 332) des Wasser-Wasser-Wärmetauschers (125, 125', 125") zu den Speisewasserheizschlangen (80, 80', 80").

19. Verfahren nach Anspruch 18, wobei der HRSG (50) eine Leitung (150, 264, 143") hat, die sich von den Speisewasserheizschlangen (80, 80', 80") zu den Niederdruck-Verdampferschlangen (77, 77', 77") von Wärmetauscherrohren erstreckt; und Hochdruck-Economizer-Schlangen (155, 155', 155") von Wärmetauscherrohren, die sich stromaufwärts von den Vorwärmer-Booster-Schlangen (74, 74', 74") befinden, und eine Leitung (150, 264, 143"), die sich von den Speisewasserheizschlangen (80, 80', 80") zu den Hochdruck-Economizer-Schlangen (155, 155', 155") erstreckt;
ferner folgende Schritte umfassend:
Leiten von Wasser aus den Speisewasserheizschlangen (80, 80', 80") zum Fließen zu einer der Niederdruck-Verdampferschlangen (77, 77', 77") oder der Hochdruck-Economizer-Schlangen (155, 155', 155").

20. Verfahren nach Anspruch 17, wobei die Speisewasserheizschlangen (80) einen ersten Abschnitt (106) und einen zweiten Abschnitt (103) umfassen, der erste Speisewasserheizabschnitt (106) eine Stromaufwärtsseite (110) und eine Stromabwärtsseite (114) hat, wobei sich die zweite Speisewasserheizleitung (135) für eine Durchflussverbindung von nahe der Stromaufwärtsseite (110) des ersten Speisewasserheizabschnitts (106) zu einer Durchflussverbindung mit den Vorwärmer-Booster-Schlangen (74) erstreckt, und eine dritte Leitung (132), die sich von einer Durchflussverbindung mit dem Wasser-Wasser-Wärmetauscher (125) zu einer Durchflussverbindung nahe der Stromabwärtsseite (112) des zweiten Speisewasserheizabschnitts (103) erstreckt;
ferner folgende Schritte umfassend:
Leiten von Wasser durch die zweite Leitung (132) von nahe der Stromaufwärtsseite (110) des ersten Speisewasserheizabschnitts (106) zum Fließen in die Vorwärmer-Booster-Schlangen (74); und
Leiten von Wasser durch die dritte Leitung (143) des Wasser-Wasser-Wärmetauschers (125) zum Fließen in den ersten Speisewasserheizabschnitt (106) nahe der Stromabwärtsseite (114) des ersten Speisewasserheizabschnitts (106).

21. Verfahren nach Anspruch 20, wobei die Vorwärmer-Booster-Schlangen (74) eine Stromaufwärtsseite (90) und eine Stromabwärtsseite (93) haben;
ferner folgende Schritte umfassend:
Leiten von Wasser durch die erste Leitung (138) zum Fließen von nahe der Stromaufwärtsseite (90) der Vorwärmer-Booster-Schlangen (74) zu dem höherer Temperaturpfad (140) des Wasser-Wasser-Wärmetauschers (125, 125', 125").

22. Verfahren nach Anspruch 21, wobei der zweite Speisewasserheizabschnitt (103) eine Stromaufwärtsseite (108) und eine Stromabwärtsseite (112) hat und eine vierte Leitung (143) hat, die sich von dem Wasser-Wasser-Wärmetauschers (125) bis nahe der Stromabwärtsseite (112) des zweiten Speisewasserheizabschnitts (103) erstreckt; und
ferner den Schritt des Leitens von Wasser zum Fließen von dem Wasser-Wasser-Wärmetauscher (125) in den zweiten Speisewasserheizabschnitt (103) nahe der Stromabwärtsseite (112) des zweiten Speisewasserheizabschnitts (103) umfasst.

23. Verfahren nach Anspruch 22, eine Leitung (150) umfassend, die sich für eine Durchflussverbindung von nahe der Stromaufwärtsseite (108) des zweiten Abschnitts (103) von der Speisewasserheizung zur Verbindung mit einen von den Niederdruck-Verdampferschlangen (77) oder den Hochdruck-Economizer-Schlangen (155) erstreckt;
ferner umfassend den Schritt des Leitens von Wasser von nahe der Stromaufwärtsseite (108) des zweiten Abschnitts (103) der Speisewasserheizung (80) zu einer der Niederdruck-Verdampferschlangen (77) oder der Hochdruck-Economizer-Schlangen (155).

24. Verfahren nach Anspruch 17, wobei die Speisewasserheizung (80') einen ersten Abschnitt (210), einen zweiten Abschnitt (213) und einen dritten Abschnitt (216) hat, und wobei:
der erste Speisewasserabschnitt (210) eine Stromaufwärtsseite (218) und eine Stromabwärtsseite (220) hat und die zweite Leitung (252) von nahe der Stromaufwärtsseite (218) des ersten Speisewasserheizabschnitts (210) bis nahe der Stromabwärtsseite (93) der Vorwärmer-Booster-Schlangen (74') fließt;
der zweite Speisewasserheizabschnitt (213) eine Stromaufwärtsseite (222) und eine Stromabwärtsseite (224) und eine dritte Leitung (261) hat, die sich von dem Wasser-Wasser-Wärmetauscher (125') zu einer Verbindung nahe der Stromabwärtsseite (224) des zweiten Speisewasserheizabschnitts (213) erstreckt; und
der dritte Speisewasserheizabschnitt (216) eine Stromaufwärtsseite (226) und eine Stromabwärtsseite (228) und eine vierte Leitung (246) hat, die sich von nahe der Stromaufwärtsseite (226) des dritten Speisewasserheizabschnitts (216) bis nahe der Stromabwärtsseite (220) des ersten Speisewasserheizabschnitts (210) erstreckt;
ferner folgende Schritte umfassend:
Leiten von Wasser zum Fließen von nahe der Stromaufwärtsseite (218) des ersten Speisewasserheizabschnitts (210) bis nahe der Stromabwärtsseite (93') der Vorwärmer-Booster-Schlangen (74'),
Leiten von Wasser zum Fließen von dem Wasser-Wasser-Wärmetauschers (125') bis nahe der Stromabwärtsseite (224) des zweiten Speisewasserheizabschnitts (213); und
Leiten von Wasser zum Fließen von nahe der Stromaufwärtsseite (226) des dritten Speisewasserheizabschnitts (216) bis nahe der Stromabwärtsseite (220) des ersten Speisewasserheizabschnitts (210).

25. Verfahren nach Anspruch 24, wobei der erste Speisewasserabschnitt (210) stromaufwärts von dem zweiten Speisewasserheizabschnitt (213) ist und der zweite Speisewasserheizabschnitt (213) stromaufwärts von dem dritten Speisewasserheizabschnitt (216) ist; und sich eine fünfte Leitung (232) von dem Wasser-Wasser-Wärmetauscher (125') zu einer Verbindung nahe der Stromabwärtsseite der dritten Speisewasserheizung (216) erstreckt;
ferner folgende Schritte umfassend:
Leiten von Wasser zum Fließen von dem Wasser-Wasser-Wärmetauschers (125') zu dem dritten Speisewasserheizabschnitt (216) nahe der Stromabwärtsseite (228) des dritten Speisewasserheizabschnitts (216).

26. Verfahren nach Anspruch 25, wobei es eine sechste Leitung (264) gibt, die sich für eine Durchflussverbindung von nahe der Stromaufwärtsseite (222) des zweiten Speisewasserheizabschnitts (213) zu einer der Niederdruck-Verdampferschlangen (77') oder der Hochdruck-Economizer-Schlangen (155') erstreckt;
ferner umfassend den Schritt des Leitens von Wasser zum Fließen von nahe der Stromaufwärtsseite (222) des zweiten Abschnitts (213) der Speisewasserheizung (80') zu einer der Niederdruck-Verdampferschlangen (77') oder der Hochdruck-Economizer-Schlangen (155').

27. Verfahren nach Anspruch 18, wobei die Temperatur von dem Speisewasser, das in den niedrigen Temperaturpfad (130, 231, 330) des Wasser-Wasser-Wärmeaustauschers eintritt, anfänglich eine Temperatur von unterhalb der des Taupunkts von Schwefelsäure in dem Abgas hat, und wobei das Speisewasser von dem Wasser-Wasser-Wärmeaustauscher (125, 125', 125") zu den Speisewasserheizschlangen (80, 80', 80") bei einer Temperatur von oder über 230 °F in die Speisewasserheizschlangen eintritt.

28. Verfahren nach Anspruch 22, wobei die Temperatur von dem Speisewasser, das in den niedrigen Temperaturpfad (130) des Wasser-Wasser-Wärmeaustauschers (125) eintritt, anfänglich eine Temperatur von unterhalb der des Taupunkts von Schwefelsäure in dem Abgas hat, das Speisewasser von der dritten Leitung (132), das von dem externen Wasser-Wasser-Wärmetauscher (125) zu dem ersten Speisewasserheizabschnitt (106) fließt, bei einer Temperatur von oder über 230 °F in den Einlass des ersten Speisewasserheizabschnitts (106) eintritt, und das Speisewasser von der vierten Leitung (143), das von dem Wasser-Wasser-Wärmetauscher (125) zu dem zweiten Speisewasserheizabschnitt (103) fließt, bei einer Temperatur von oder über 230 °F in den zweiten Speisewasserheizabschnitt (103) eintritt.

29. Verfahren nach Anspruch 25, wobei die Temperatur von dem Speisewasser, das in den niedrigen Temperaturpfad (231) des Wasser-Wasser-Wärmeaustauschers (125') eintritt, anfänglich eine Temperatur von unterhalb der des Taupunkts von Schwefelsäure in dem Abgas hat, das Speisewasser von der fünften Leitung (232), das von dem Wasser-Wasser-Wärmeaustauscher (125') zu dem dritten Speisewasserheizabschnitt (216) fließt, bei einer Temperatur von oder über 230 °F in den dritten Speisewasserheizabschnitt (216) eintritt, und das Speisewasser von der dritten Leitung (261), das von dem Wasser-Wasser-Wärmeaustauscher (125') zu dem zweiten Speisewasserheizabschnitt (213) fließt, bei einer Temperatur von oder über 230 °F in den zweiten Speisewasserheizabschnitt (213) eintritt.

## Revendications

1. Générateur de vapeur à récupération de chaleur (50) comprenant :
un boîtier (53) comportant une entrée (56) et une sortie (59) ainsi qu'une voie d'écoulement de gaz entre celles-ci pour un écoulement de gaz en amont de l'entrée (56) vers la sortie (59) en aval de celle-ci ;
des serpentins d'évaporateur à basse pression (77, 77', 77") de tubes d'échangeur de chaleur, les serpentins d'évaporateur à basse pression (77, 77', 77") étant situés à l'intérieur du boîtier (53) en aval de l'entrée (56) ;
des serpentins de préchauffeur auxiliaire (74, 74', 74") de tubes d'échangeur de chaleur, les serpentins de préchauffeur auxiliaire (74, 74', 74") étant situés à l'intérieur du boîtier (53) en aval de l'entrée du boîtier (56) et en amont des serpentins d'évaporateur à basse pression (77, 77', 77"), de façon à ce que le gaz passant par l'entrée (56) puisse s'écouler en aval pour passer à travers les serpentins de préchauffeur auxiliaire (74, 74', 74"), et que le gaz passant à travers les serpentins de préchauffeur auxiliaire (74, 74', 74") puisse s'écouler en aval de ceux-ci ;
des serpentins de réchauffeur d'eau d'alimentation (80, 80', 80") de tubes d'échangeur de chaleur, les serpentins de réchauffeur d'eau d'alimentation (80, 80', 80") étant situés à l'intérieur du boîtier (53) en aval des serpentins d'évaporateur à basse pression (77, 77', 77") de façon à ce que le gaz passant à travers les serpentins d'évaporateur à basse pression (77, 77', 77") puisse s'écouler en aval des serpentins d'évaporateur à basse pression (77, 77', 77") pour passer à travers les serpentins de réchauffeur d'eau d'alimentation (80, 80', 80") ;
un échangeur de chaleur eau-eau (125, 125', 125") comportant une voie à basse température (130, 231, 330) et une voie à température plus élevée (140, 258, 140") ;
un premier conduit (138, 255, 138") s'étendant de la liaison d'écoulement avec les serpentins de préchauffeur auxiliaire (74, 74', 74") à la liaison d'écoulement avec la voie à haute température (140, 258, 140") de l'échangeur de chaleur eau-eau (125, 125', 125"), le premier conduit (138, 255, 138") étant conçu pour que l'eau s'y écoule des serpentins de préchauffeur auxiliaire (74, 74', 74") à l'échangeur de chaleur eau-eau (125, 125', 125") ; et
un deuxième conduit (135, 252, 135") s'étendant des serpentins de réchauffeur d'eau d'alimentation (80, 80', 80") aux serpentins de préchauffeur auxiliaire (74, 74', 74") de tubes d'échangeur de chaleur, le deuxième conduit (135, 252, 135") étant conçu pour permettre à l'eau de s'y écouler des serpentins de réchauffeur d'eau d'alimentation (80, 80', 80") aux serpentins de préchauffeur auxiliaire (74, 74', 74").

2. Générateur de vapeur à récupération de chaleur (50) selon la revendication 1, dans lequel les serpentins de préchauffeur auxiliaire (74, 74', 74") présentent une face amont (90, 90', 90") et le premier conduit (138, 255, 138") sort des serpentins de préchauffeur auxiliaire (74, 74', 74") au voisinage de la face amont (90, 90', 90") des serpentins de préchauffeur auxiliaire (74, 74', 74").

3. Générateur de vapeur à récupération de chaleur (50) selon la revendication 2, dans lequel les serpentins de préchauffeur auxiliaire (74, 74', 74") présentent une face aval (93, 93', 93") et les serpentins de réchauffeur d'eau d'alimentation (80, 80', 80") présentent une face amont (110, 218, 110") et le deuxième conduit (135, 252, 135") sort des serpentins de réchauffeur d'eau d'alimentation (80, 80', 80") au voisinage de la face amont (110, 218, 110") des serpentins de réchauffeur d'eau d'alimentation (80, 80', 80") pour s'étendre vers la liaison d'écoulement avec les serpentins de préchauffeur auxiliaire (74, 74', 74") au voisinage de la face aval (93, 93', 93") des serpentins de préchauffeur auxiliaire (74, 74', 74").

4. Générateur de vapeur à récupération de chaleur (50) selon la revendication 3, comprenant en outre un conduit (150, 264, 143") conçu pour s'étendre à des fins de liaison d'écoulement, des serpentins de réchauffeur d'eau d'alimentation (80, 80', 80") aux serpentins d'évaporateur à basse pression (77, 77', 77") de tubes d'échangeur de chaleur.

5. Générateur de vapeur à récupération de chaleur (50) selon la revendication 3, comprenant en outre un conduit (143, 261, 332) conçu pour s'étendre à des fins de liaison d'écoulement, depuis l'échangeur de chaleur eau-eau (125, 125', 125") pour être en liaison d'écoulement avec les serpentins de réchauffeur d'eau d'alimentation (80, 80', 80") afin de permettre un écoulement de l'échangeur de chaleur eau-eau (125, 125', 125") aux serpentins de réchauffeur d'eau d'alimentation (80, 80', 80").

6. Générateur de vapeur à récupération de chaleur (50) selon la revendication 1, comprenant en outre des serpentins d'économiseur à haute pression (155, 155', 155") de tubes d'échangeur de chaleur situés en amont des serpentins de préchauffeur auxiliaire (74, 74', 74"), et un conduit (150, 264, 143") conçu pour s'étendre à des fins de liaison d'écoulement, des serpentins de réchauffeur d'eau d'alimentation (80, 80', 80") aux serpentins d'économiseur à haute pression (155, 155', 155") de tubes d'échangeur de chaleur.

7. Générateur de vapeur à récupération de chaleur (50) selon la revendication 6, comprenant en outre des serpentins amont supplémentaires (70) de tubes d'échangeur de chaleur, lesdits serpentins amont supplémentaires (70) étant situés à l'intérieur du boîtier (53) en amont des serpentins d'économiseur à haute pression (155, 155', 155") et en aval de l'entrée du boîtier (56), de façon à ce que le gaz venant de l'entrée (56) puisse s'écouler en aval à travers lesdits serpentins amont supplémentaires (70) et par la suite s'écouler à travers les serpentins d'économiseur à haute pression (155, 155', 155").

8. Générateur de vapeur à récupération de chaleur (50) selon la revendication 1, dans lequel les serpentins de réchauffeur d'eau d'alimentation (80, 80', 80") comprennent une première section (106) et une seconde section (103), et dans lequel le deuxième conduit (135) s'étend de la première section de réchauffeur d'eau d'alimentation (106) aux serpentins de préchauffeur auxiliaire (74, 74', 74").

9. Générateur de vapeur à récupération de chaleur (50) selon la revendication 8, comprenant en outre la première section de réchauffeur d'eau d'alimentation (106) présentant une face amont (110) et une face aval (114), et dans lequel le deuxième conduit (135) s'étend à des fins de liaison d'écoulement, du voisinage de la face amont (110) de ladite première section (106) à la liaison d'écoulement avec les serpentins de préchauffeur auxiliaire (74, 74', 74"), et comprenant en outre un troisième conduit (132) s'étendant de la liaison d'écoulement avec l'échangeur de chaleur eau-eau (125) à la liaison d'écoulement au voisinage de la face aval (114) de la première section de réchauffeur d'eau d'alimentation (106).

10. Générateur de vapeur à récupération de chaleur (50) selon la revendication 2, comprenant en outre les serpentins de réchauffeur d'eau d'alimentation (80") comportant une première section (210), une deuxième section (213) et une troisième section (216), et dans lequel :
la première section d'eau d'alimentation (210) présente une face amont (218) et une face aval (220) et dans lequel le deuxième conduit (252) s'étend du voisinage de la face amont (218) de ladite première section d'eau d'alimentation (210) jusqu'au voisinage de la face aval (93') des serpentins de préchauffeur auxiliaire (74') ;
la deuxième section de réchauffeur d'eau d'alimentation (213) présente une face amont (222) et une face aval (224), et un troisième conduit (261) s'étendant de la liaison d'écoulement avec l'échangeur de chaleur eau-eau (125') à la liaison d'écoulement au voisinage de la face aval (224) de la deuxième section de réchauffeur d'eau d'alimentation (213), ledit troisième conduit (261) étant conçu pour que l'eau s'y écoule de l'échangeur de chaleur eau-eau (125') à la deuxième section de réchauffeur d'eau d'alimentation (213) ; et
ladite troisième section de réchauffeur d'eau d'alimentation (216) présente une face amont (226) et une face aval (228), et dans lequel un quatrième conduit (246) s'étend du voisinage de la face amont (226) de la troisième section de réchauffeur d'eau d'alimentation (216) jusqu'au voisinage de la face aval (220) de la première section de réchauffeur d'eau d'alimentation (210), ledit quatrième conduit (246) étant conçu pour que l'eau s'y écoule de la troisième section de réchauffeur d'eau d'alimentation (216) à la première section de réchauffeur d'eau d'alimentation (210).

11. Générateur de vapeur à récupération de chaleur (50) selon la revendication 10, comprenant en outre un conduit (264) s'écoulant du voisinage de la face amont (222) de la deuxième section (213) des serpentins de réchauffeur d'eau d'alimentation (80') à la liaison avec les serpentins d'évaporateur à basse pression (77') ou les serpentins d'économiseur à haute pression (155').

12. Générateur de vapeur à récupération de chaleur (50) selon la revendication 11, comprenant en outre: des serpentins d'économiseur à haute pression (155') de tubes d'échangeur de chaleur situés en amont des serpentins de préchauffeur auxiliaire (74'), et un conduit (264) conçu pour s'étendre à des fins de liaison d'écoulement, des serpentins de réchauffeur d'eau d'alimentation (80') aux serpentins d'économiseur à haute pression (155) de tubes d'échangeur de chaleur ; et des serpentins amont supplémentaires (70) de tubes d'échangeur de chaleur, lesdits serpentins amont supplémentaires (70) étant situés à l'intérieur du boîtier (53) en amont des serpentins d'économiseur à haute pression (155') et en aval de l'entrée du boîtier (56), de façon à ce que le gaz venant de l'entrée (56) puisse s'écouler en aval à travers lesdits serpentins amont supplémentaires (70) et par la suite s'écouler à travers les serpentins d'économiseur à haute pression (155').

13. Générateur de vapeur à récupération de chaleur (50) selon la revendication 10, comprenant en outre la première section de réchauffeur d'eau d'alimentation (210) en amont de la deuxième section de réchauffeur d'eau d'alimentation (213), et la deuxième section de réchauffeur d'eau d'alimentation (213) en amont de ladite troisième section de réchauffeur d'eau d'alimentation (216).

14. Générateur de vapeur à récupération de chaleur (50) selon la revendication 13, comprenant en outre un cinquième conduit (232) conçu pour s'étendre à des fins de liaison d'écoulement, de l'échangeur de chaleur eau-eau (125') jusqu'au voisinage de la face aval (228) de la troisième section de réchauffeur d'eau d'alimentation (216) pour être en liaison d'écoulement avec les serpentins de réchauffeur d'eau d'alimentation de la troisième section de réchauffeur d'eau d'alimentation (216) afin de permettre un écoulement de l'échangeur de chaleur eau-eau (125') aux serpentins de réchauffeur d'eau d'alimentation de la troisième section de réchauffeur d'eau d'alimentation (216).

15. Générateur de vapeur à récupération de chaleur (50) selon la revendication 14, comprenant en outre: des serpentins d'économiseur à haute pression (155') de tubes d'échangeur de chaleur situés en amont des serpentins de préchauffeur auxiliaire (74') ; et un sixième conduit (264) conçu pour s'étendre à des fins de liaison d'écoulement, du voisinage de la face amont (222) de la deuxième section de réchauffeur d'eau d'alimentation (213) à la liaison d'écoulement avec les serpentins d'évaporateur à basse pression (77') ou les serpentins d'économiseur à haute pression (155').

16. Générateur de vapeur à récupération de chaleur (50) selon la revendication 15, comprenant en outre des serpentins amont supplémentaires (70) de tubes d'échangeur de chaleur, lesdits serpentins amont supplémentaires (70) étant situés à l'intérieur du boîtier (53) en amont des serpentins d'économiseur à haute pression (155') et en aval de l'entrée du boîtier (56), de façon à ce que le gaz venant de l'entrée (56) puisse s'écouler en aval à travers lesdits serpentins amont supplémentaires (70) et par la suite s'écouler à travers les serpentins d'économiseur à haute pression (155').

17. Procédé permettant de chauffer de l'eau d'alimentation d'un générateur de vapeur à récupération de chaleur (GVRC) (50), lequel générateur GVRC (50) comporte :
un boîtier (53) comportant une entrée (56) et une sortie (59) ainsi qu'une voie d'écoulement d'échappement de gaz interne entre celles-ci, comprenant :
un échangeur de chaleur eau-eau (125, 125', 125") positionné pour être extérieur à la voie d'écoulement d'échappement de gaz interne du générateur GVRC, l'échangeur de chaleur eau-eau externe (125, 125', 125") comportant une voie à basse température (130, 231, 330) et une voie à température plus élevée (140, 258, 140");
des serpentins d'évaporateur à basse pression (77, 77', 77") de tubes d'échangeur de chaleur, les serpentins d'évaporateur à basse pression (77, 77', 77") étant situés à l'intérieur du boîtier en aval de l'entrée ;
des serpentins de préchauffeur auxiliaire (74, 74', 74") de tubes d'échangeur de chaleur, les serpentins de préchauffeur auxiliaire (74, 74', 74") étant situés à l'intérieur du boîtier (53) en aval de l'entrée du boîtier (56) et en amont des serpentins d'évaporateur à basse pression (77, 77', 77"), de façon à ce que le gaz passant par l'entrée (56) puisse s'écouler en aval pour passer à travers les serpentins de préchauffeur auxiliaire (74, 74', 74"), et que le gaz passant à travers les serpentins de préchauffeur auxiliaire (74, 74', 74") puisse s'écouler en aval de ceux-ci ;
des serpentins de réchauffeur d'eau d'alimentation (80, 80', 80") de tubes d'échangeur de chaleur, les serpentins de réchauffeur d'eau d'alimentation (80, 80', 80") étant situés à l'intérieur du boîtier (53) en aval des serpentins d'évaporateur à basse pression (77, 77', 77"), de façon à ce que le gaz passant à travers les serpentins d'évaporateur à basse pression (77, 77', 77") puisse s'écouler en aval des serpentins d'évaporateur à basse pression (77, 77', 77") pour passer à travers les serpentins de réchauffeur d'eau d'alimentation (80, 80', 80") ;
un premier conduit (138, 255, 138") s'étendant de la liaison d'écoulement avec les serpentins de préchauffeur auxiliaire (74, 74', 74") à la liaison d'écoulement avec la voie à haute température (140, 258, 140") de l'échangeur de chaleur eau-eau (125, 125', 125") ; et
un deuxième conduit (135, 252, 135") s'étendant des serpentins de réchauffeur d'eau d'alimentation (80, 80', 80") aux serpentins de préchauffeur auxiliaire (74, 74', 74") de tubes d'échangeur de chaleur ;
le procédé comprenant les étapes consistant à :
diriger l'eau pour qu'elle s'écoule à travers le premier conduit (138, 255, 138"), des serpentins de préchauffeur auxiliaire (74, 74', 74") à la voie à température plus élevée (140, 258, 140") de l'échangeur de chaleur eau-eau (125, 125', 125") ; et
diriger l'eau pour qu'elle s'écoule à travers le deuxième conduit (135, 252, 135"), des serpentins de réchauffeur d'eau d'alimentation (80, 80', 80") aux serpentins de préchauffeur auxiliaire (74, 74', 74") de tubes d'échangeur de chaleur.

18. Procédé selon la revendication 17, dans lequel les serpentins de préchauffeur auxiliaire (74, 74', 74") présentent une face amont (90, 90', 90") et une face aval (93, 93', 93"), et les serpentins de réchauffeur d'eau d'alimentation (80, 80', 80") présentent une face amont (110, 218, 110") ; un troisième conduit (132, 232, 332) s'étendant de l'échangeur de chaleur eau-eau (125, 125', 125") aux serpentins de réchauffeur d'eau d'alimentation (80, 80', 80") ;
comprenant en outre les étapes consistant à :
diriger l'eau pour qu'elle sorte des serpentins de préchauffeur auxiliaire (74, 74', 74") à travers le premier conduit (138, 255, 138") au voisinage de la face amont (90, 90', 90") des serpentins de préchauffeur auxiliaire (74, 74', 74") pour s'écouler dans la voie à température plus élevée (140, 258, 140") de l'échangeur de chaleur eau-eau (125, 125', 125") ;
diriger l'eau depuis les serpentins de réchauffeur d'eau d'alimentation (80, 80', 80") au voisinage de la face amont (110, 218, 110") des serpentins de réchauffeur d'eau d'alimentation (80, 80', 80") à travers le deuxième conduit (135, 252, 135") pour qu'elle s'écoule dans la liaison avec les serpentins de préchauffeur auxiliaire (74, 74', 74") au voisinage de la face aval (93, 93', 93") des serpentins de préchauffeur auxiliaire (74, 74', 74") ; et
diriger l'eau pour qu'elle s'écoule à travers le troisième conduit (132, 232, 332), de l'échangeur de chaleur eau-eau (125, 125', 125") aux serpentins de réchauffeur d'eau d'alimentation (80, 80', 80").

19. Procédé selon la revendication 18, dans lequel le générateur GVRC (50) comporte un conduit (150, 264, 143") s'étendant des serpentins de réchauffeur d'eau d'alimentation (80, 80', 80") aux serpentins d'évaporateur à basse pression (77, 77', 77") de tubes d'échangeur de chaleur; et des serpentins d'économiseur à haute pression (155, 155', 155") de tubes d'échangeur de chaleur situés en amont des serpentins de préchauffeur auxiliaire (74, 74', 74") et un conduit (150, 264, 143") s'étendant des serpentins de réchauffage d'eau d'alimentation (80, 80', 80") aux serpentins d'économiseur à haute pression (155, 155', 155") ;
comprenant en outre les étapes consistant à :
diriger l'eau depuis les serpentins de réchauffeur d'eau d'alimentation (80, 80', 80") pour qu'elle s'écoule vers les serpentins d'évaporateur à basse pression (77, 77', 77") ou les serpentins d'économiseur à haute pression (155, 155', 155").

20. Procédé selon la revendication 17, dans lequel les serpentins de réchauffeur d'eau d'alimentation (80) comprennent une première section (106) et une seconde section (103), la première section de réchauffeur d'eau d'alimentation (106) présentant une face amont (110) et une face aval (114), dans lequel le deuxième conduit de réchauffeur d'eau d'alimentation (135) s'étend à des fins de liaison d'écoulement, du voisinage de la face amont (110) de la première section de réchauffeur d'eau d'alimentation (106) à la liaison d'écoulement avec les serpentins de préchauffeur auxiliaire (74), et un troisième conduit (132) s'étendant de la liaison d'écoulement avec l'échangeur de chaleur eau-eau (125) à la liaison d'écoulement au voisinage de la face aval (112) de la seconde section de réchauffeur d'eau d'alimentation (103) ;
comprenant en outre les étapes consistant à :
diriger l'eau à travers le deuxième conduit (132), depuis le voisinage de la face amont (110) de ladite première section de réchauffeur d'eau d'alimentation (106) pour qu'elle s'écoule dans les serpentins de préchauffeur auxiliaire (74) ; et
diriger l'eau à travers le troisième conduit (143), depuis l'échangeur de chaleur eau-eau (125) pour qu'elle s'écoule dans la première section de réchauffeur d'eau d'alimentation (106), au voisinage de la face aval (114) de la première section de réchauffeur d'eau d'alimentation (106).

21. Procédé selon la revendication 20, dans lequel les serpentins de préchauffeur auxiliaire (74) présentent une face amont (90) et une face aval (93) ;
comprenant en outre les étapes consistant à :
diriger l'eau à travers le premier conduit (138) pour qu'elle s'écoule du voisinage de la face amont (90) des serpentins de préchauffeur auxiliaire (74) à la voie à température plus élevée (140) de l'échangeur de chaleur eau-eau (125, 125', 125").

22. Procédé selon la revendication 21, dans lequel la deuxième section de réchauffeur d'eau d'alimentation (103) présente une face amont (108) et une face aval (112), et comportant un quatrième conduit (143) s'étendant de l'échangeur de chaleur eau-eau (125) jusqu'au voisinage de la face aval (112) de la deuxième section de réchauffeur d'eau d'alimentation (103) ; et
comprenant en outre l'étape consistant à diriger l'eau pour qu'elle s'écoule de l'échangeur de chaleur eau-eau (125) dans la seconde section de réchauffeur d'eau d'alimentation (103), au voisinage de la face aval (112) de la seconde section de réchauffeur d'eau d'alimentation (103).

23. Procédé selon la revendication 22, comportant un conduit (150) s'étendant, à des fins de liaison d'écoulement, du voisinage de la face amont (108) de la seconde section (103) du réchauffeur d'eau d'alimentation à la liaison avec les serpentins d'évaporateur à basse pression (77) ou les serpentins d'économiseur à haute pression (155);
comprenant en outre l'étape consistant à diriger l'eau depuis le voisinage de la face amont (108) de la seconde section (103) du réchauffeur d'eau d'alimentation (80) jusqu'aux serpentins d'évaporateur à basse pression (77) ou jusqu'aux serpentins d'économiseur à haute pression (155).

24. Procédé selon la revendication 17, dans lequel le réchauffeur d'eau d'alimentation (80') comporte une première section (210), une deuxième section (213) et une troisième section (216), et dans lequel :
la première section d'eau d'alimentation (210) présente une face amont (218) et une face aval (220) et le deuxième conduit (252) s'écoule du voisinage de la face amont (218) de la première section de réchauffeur d'eau d'alimentation (210) jusqu'au voisinage de la face aval (93) des serpentins de préchauffeur auxiliaire (74'),
la deuxième section de réchauffeur d'eau d'alimentation (213) présente une face amont (222) et une face aval (224), et un troisième conduit (261) s'étend de l'échangeur de chaleur eau-eau (125') à la liaison au voisinage de la face aval (224) de la deuxième section de réchauffeur d'eau d'alimentation (213) ; et
la troisième section de réchauffeur d'eau d'alimentation (216) présente une face amont (226) et une face aval (228), et un quatrième conduit (246) s'étend du voisinage de la face amont (226) de la troisième section de réchauffeur d'eau d'alimentation (216) jusqu'au voisinage de la face aval (220) de la première section de réchauffeur d'eau d'alimentation (210) ;
comprenant en outre les étapes consistant à :
diriger l'eau pour qu'elle s'écoule du voisinage de la face amont (218) de la première section de réchauffeur d'eau d'alimentation (210) jusqu'au voisinage de la face aval (93') des serpentins de préchauffeur auxiliaire (74'),
diriger l'eau pour qu'elle s'écoule de l'échangeur de chaleur eau-eau (125') jusqu'au voisinage de la face aval (224) de la deuxième section de réchauffeur d'eau d'alimentation (213) ; et
diriger l'eau pour qu'elle s'écoule du voisinage de la face amont (226) de la troisième section de réchauffeur d'eau d'alimentation (216) jusqu'au voisinage de la face aval (220) de la première section de réchauffeur d'eau d'alimentation (210).

25. Procédé selon la revendication 24, dans lequel la première section d'eau d'alimentation (210) est en amont de la deuxième section de réchauffeur d'eau d'alimentation (213), et la deuxième section de réchauffeur d'eau d'alimentation (213) est en amont de la troisième section de réchauffeur d'eau d'alimentation (216) ; et un cinquième conduit (232) s'étendant de l'échangeur de chaleur eau-eau (125') pour se raccorder au voisinage de la face aval du troisième réchauffeur d'eau d'alimentation (216) ;
comprenant en outre les étapes consistant à :
diriger l'eau pour qu'elle s'écoule de l'échangeur de chaleur eau-eau (125') à la troisième section de réchauffeur d'eau d'alimentation (216), au voisinage de la face aval (228) de la troisième section de réchauffeur d'eau d'alimentation (216).

26. Procédé selon la revendication 25, dans lequel il existe un sixième conduit (264) s'étendant à des fins de liaison d'écoulement, du voisinage de la face amont (222) de la deuxième section de réchauffeur d'eau d'alimentation (213) aux serpentins d'évaporateur à basse pression (77') ou aux serpentins d'économiseur à haute pression (155') ;
comprenant en outre l'étape consistant à diriger l'eau pour qu'elle s'écoule du voisinage de la face amont (222) de la deuxième section (213) du réchauffeur d'eau d'alimentation (80') jusqu'aux serpentins d'évaporateur à basse pression (77') ou jusqu'aux serpentins d'économiseur à haute pression (155').

27. Procédé selon la revendication 18, dans lequel la température de l'eau d'alimentation pénétrant dans la voie à basse température (130, 231, 330) de l'échangeur de chaleur eau-eau est initialement une température inférieure à celle du point de rosée de l'acide sulfurique dans le gaz d'échappement, et l'eau d'alimentation de l'échangeur de chaleur eau-eau (125, 125', 125") aux serpentins de réchauffeur d'eau d'alimentation (80, 80', 80") pénètre dans les serpentins de réchauffeur d'eau d'alimentation à au moins 230 °F.

28. Procédé selon la revendication 22, dans lequel la température de l'eau d'alimentation pénétrant dans la voie à basse température (130) de l'échangeur de chaleur eau-eau (125) est initialement une température inférieure à celle du point de rosée de l'acide sulfurique dans le gaz d'échappement, l'eau d'alimentation provenant du troisième conduit (132) s'écoulant de l'échangeur de chaleur eau-eau externe (125) à la première section de réchauffeur d'eau d'alimentation (106) pénètre par l'entrée de la première section de réchauffeur d'eau d'alimentation (106) à une température supérieure ou égale à 230 °F, et l'eau d'alimentation provenant du quatrième conduit (143) s'écoulant de l'échangeur de chaleur eau-eau (125) à la seconde section de réchauffeur d'eau d'alimentation (103) pénètre dans la seconde section de réchauffeur d'eau d'alimentation (103) à une température supérieure ou égale à 230 °F.

29. Procédé selon la revendication 25, dans lequel la température de l'eau d'alimentation pénétrant dans la voie à basse température (231) de l'échangeur de chaleur eau-eau (125') est initialement une température inférieure à celle du point de rosée de l'acide sulfurique dans le gaz d'échappement, l'eau d'alimentation provenant du cinquième conduit (232) s'écoulant de l'échangeur de chaleur eau-eau (125') à la troisième section de réchauffeur d'eau d'alimentation (216) pénètre dans la troisième section de réchauffeur d'eau d'alimentation (216) à une température supérieure ou égale 230 °F, et l'eau d'alimentation provenant du troisième conduit (261) s'écoulant de l'échangeur de chaleur eau-eau (125') à la deuxième section de réchauffeur d'eau d'alimentation (213) pénètre dans la deuxième section de réchauffeur d'eau d'alimentation (213) à une température supérieure ou égale à 230 °F.
